# EUROPEAN PATENT APPLICATION

(11) **EP 4 625 740 A1**
(43) Date of publication of application: **01.10.2025**
(21) Application number: 24166482.0
(22) Date of filing: 26.03.2024
(51) Int. Cl.: H02J 3/00, H02J 3/38, H02J 7/00, G06Q 50/06, H02J 13/00, H02J 3/28

(54) **METHOD OF PROPAGATING INFORMATION ON POWER GRID ENERGY FLOWS, DEVICE, AND MACHINE-READABLE INSTRUCTION CODE**

(71) Applicant: Hitachi Energy Ltd, 8050 Zürich (CH)
(72) Inventor: Deck, Bernhard, 79809 Weilheim (DE); Dan, Andrei-Marian, 8112 Otelfingen (CH); Knezovic, Katarina, 8006 Zurich (CH)
(74) Representative: Meier, Florian

(57) **Abstract**

To make information on an energy flow composition available for an electric power system (40), devices (31-36) of a communication system (30) exchange data specifying the energy flow composition. The devices (31-36) are operative to exchange the data by means of a message exchange that generally follows the energy flow paths in a power grid (10) of the electric power system (40).

## Description

### TECHNICAL FIELD

Embodiments of the invention relate to methods, devices, and systems for electric power systems. Embodiments of the invention relate in particular to methods, devices, and systems operative to propagate information on power grid energy flows to an electric power consumer.

### BACKGROUND

Global warming is a major challenge to humankind. To address this significant challenge, there is a trend towards renewable energy source deployment in many countries. The electric power provided by renewable energy sources varies in dependence on ambient conditions that are not under the control of the power source operator, such as weather conditions. At least for the foreseeable future, the installed capacity of energy storage systems is not sufficient to buffer enough energy to fully compensate the variations in renewables energy generation. Load curtailment can help reduce the challenge, but may not be able to resolve it. Different types of electric power sources, including both renewable energy source and electric power sources other than renewable energy sources are therefore used in combination to generate electric power.

The composition of an energy flow, in particular the fractional contribution stemming from one or several renewable energy sources and the fractional contribution stemming from electric power sources other than renewable energy sources, is an important quantity to assess the carbon footprint (and optionally also other ecological impact factors, such as the need for waste disposal) associated with electric energy consumption. The electricity composition information is key for raising the awareness of the energy consumers, as well as enabling consumption times to be selected based on the type of electricity available at that moment. In addition, with raising sustainability regulations, various consumers are required to certify their sustainability impact which includes the electricity they are consuming. Although the electricity type and produced amount for each generation source is known, this information is not available to consumers and, possibly, some other power grid nodes.

CN 106 505 635 A, CN 112 003 376 A, CN 115 600 798 A, CN 106 384 168 A, and CN 111 724 046 A disclose techniques useful in association with power grids.

There is still a need for improved techniques for making the contributions from different types of energy sources to an energy flow available for use in control actions, such as adjusting consumption based on the fraction of renewable energy in a presently incoming energy flow.

### SUMMARY

It is an object of the invention to provide enhanced techniques for making information related to energy flows in a power grid available. It is in particular an object of the invention to provide techniques useful for providing information related to an energy composition that specifies the contributions of different energy sources types to the energy flow. It is an optional object of the invention to provide techniques useful for providing information related to an energy composition that specifies the contributions of different energy sources types to the energy flow to consumers of the electric power grid.

The methods, devices, and systems disclosed in this application provide a technique of electricity composition tracking. The methods, device, and systems are operative to efficiently propagate along the power grid the information about the energy composition, from the producers (i.e., energy sources) to the consumers.

According to embodiments, a method, a device, and machine-readable instruction code as recited in the independent claims are provided. The dependent claims define preferred or advantageous embodiments.

According to an aspect of the invention, there is provided a method of propagating information on power grid energy flows is provided. The method comprises exchanging, by a device, data over at least one data interface, the data being indicative of an energy flow composition, the energy flow composition being a composition by energy source type, the device being associated with a power grid node of the power grid. Exchanging the data comprises: receiving at least one first message from at least one first device associated with at least one first power grid node, wherein the power grid node receives an energy inflow from the at least one first power grid node; and/or transmitting at least one second message to at least one second device associated with at least one second power grid node, wherein the power grid node provides an energy outflow to the at least one second power grid node.

Various effects and advantages are attained by the method. The method establishes an exchange of data in messages (i.e., the first and/or second message(s)) that respectively carry information on the energy flow composition between a pair of different nodes of the power grid that are connected to each other. The message flow follows the energy flow in the sense that, responsive to an energy inflow at the power grid node from one or several first power grid nodes to which the power grid node is connected by associated power grid lines (without any intervening nodes therebetween), there is an accompanying flow of messages received by the device associated with the power grid node, each of the messages carrying information on the energy flow composition of the energy inflow at the power grid node. The message flow follows the energy flow in the sense that, responsive to an energy outflow from the power grid node to one or several second power grid nodes to which the power grid node is connected by associated power grid lines (without any intervening nodes therebetween), there is an accompanying transmission of messages by the device associated with the power grid node, each of the messages carrying information on the energy flow composition of the energy inflow at the power grid node. This makes it possible to establish a flow of messages, each carrying information on the energy flow composition of energy transmitted over a power grid line (e.g., of a single power grid line) of the power grid, in a communication system of an electric power system. Information on the energy flow composition (which specifies the contribution of different energy source types to the energy inflow and/or energy outflow of the power grid node) may thereby be propagated in the communication system. The information on the energy flow composition can be propagated from the energy source nodes of the power grid to a device associated with one of the consumer nodes of the power grid, thereby providing quantitative information on the contributions of different energy source types to the energy inflow of the consumer node.

The method may comprise repeating the exchange of data continually (i.e., on an ongoing basis) during power grid operation.

Thereby, time-resolved information on the energy flow composition is propagated from the energy source nodes to the consumer nodes, making the energy flow composition available for performing control actions at the consumer nodes or, if desired, at intervening nodes.

The method may comprise repeating the transmission and/or receipt of messages (i.e., the first and/or second messages) responsive to a trigger criterion. The trigger criterion may be time-based (e.g., lapse of an interval from the last message exchange, with the interval being constant or time-varying) or event-based (e.g., circuit breaker switch, change in generator unit commitment of an energy source node, etc.).

Thereby, time-resolved information on the energy flow composition is propagated from the energy source nodes to the consumer nodes, making the energy flow composition available for performing control actions at the consumer nodes or, if desired, at intervening nodes.

The method may comprise exchanging the data to establish a flow of energy composition information from an energy source node device associated with an energy source node of the power grid to a consumer node device associated with a consumer node of the power grid.

Thereby, the consumer node receives the energy flow composition information as propagated along the energy flow path from the energy source node to the consumer node. This allows information on the energy source types that contribute to the energy inflow of the consumer node to be provided that correctly reflect the actual contributions at a given time.

The method may comprise exchanging the data to establish a flow of energy composition information for any energy flow path from energy source nodes to a consumer node of the power grid that contribute to the energy inflow of the consumer node.

Thereby, the consumer node receives the energy flow composition information as propagated along the energy flow paths from all energy source nodes that contribute to the energy inflow of the consumer node. This allows information on the energy source types that contribute to the energy inflow of the consumer node to be provided that correctly reflect the actual contributions at a given time. This allows control actions to be taken, such as by selectively powering on or powering off devices, based on the contributions of the several energy source types to the energy inflow of the consumer node.

The method may comprise applying, by the device, Kirchhoff's junction rule (specifying that the sum of the outgoing currents is equal to the sum of incoming currents at the node with which the device is associated) to determine the data indicative of the energy flow composition for outgoing current flows, which are included in the at least one second message.

Thereby, the data specifying the energy flow composition for outgoing current flow(s) can be generated, by the device, based on the data specifying the energy flow composition for incoming current flow(s) and include them in the second message(s).

The method may comprise exchanging the data to establish a flow of energy composition information from each of a set of energy source node devices associated with a set of energy source nodes of the power grid to a consumer node device associated with a consumer node of the power grid, wherein the set of energy source nodes comprises or consists of the energy source nodes that contribute to the energy inflow of the consumer node, and wherein the set of energy source node devices comprise or consist of the devices of the communication system associated with an energy source node of the set of energy source nodes.

Thereby, the consumer node receives the energy flow composition information as propagated along the energy flow paths from all energy source nodes that contribute to the energy inflow of the consumer node. This allows information on the energy source types that contribute to the energy inflow of the consumer node to be provided that correctly reflect the actual contributions at a given time. This allows control actions to be taken, such as by selectively powering on or powering off devices, based on the contributions of the several energy source types to the energy inflow of the consumer node.

Each of the messages (i.e., each of the first messages and/or of the second messages) may comprise time data specifying a time interval for which the energy flow composition information is provided, the data indicative of an energy flow composition, and a signature.

Thereby, the messages can propagate the information on the energy flow composition in a time-dependent manner (specifying the time interval to which the data apply), while allowing the origin and/or authenticity of the messages to be verified based on the signatures.

The signature may comprise a signature for authentication.

Thereby, the messages can propagate the information on the energy flow composition in a time-dependent manner (specifying the time interval to which the data apply), while allowing the authenticity of the messages to be verified based on the signatures.

Exchanging the data may comprise receiving, by the device and over the at least one data interface, several first messages, each of the several first message specifying contributions of several different energy source types to the energy inflow of the power grid node in at least one first power line of the power grid.

Thereby, the different compositions of energy inflows received by the power grid node over different power grid lines may be ascertained by the device. This allows the energy composition of the overall energy inflow to be determined.

The power grid node may receive the energy inflow from several first power grid nodes via several first power lines of the power grid, wherein the device may receive at least one of the several first messages for each of the several first power lines to obtain the energy flow composition for each of the several first power lines.

Thereby, the different compositions of energy inflows received by the power grid node over different power grid lines may be ascertained by the device. This allows the energy composition of the overall energy inflow to be determined.

Each of the several first messages may specify the energy flow composition for only one of the first power lines.

Thereby, information on the energy flow composition is propagated in a manner that enables the flow of the data indicating the energy flow composition to follow the energy flow path through the power grid. A systematic propagation of the data indicating the energy flow composition is enabled thereby.

The device may receive the several first messages from several first devices associated the several first power grid nodes.

Thereby, information on the energy flow composition is propagated in a manner that enables the flow of the data indicating the energy flow composition to follow the energy flow path through the power grid. A systematic propagation of the data indicating the energy flow composition is enabled thereby.

Receipt of at least one of the first messages by the device may be triggered when the energy flow composition in at least one of the several first power lines changes.

Thereby, the device is informed of changes in the energy flow composition of an energy flow received via at least one of the several first power lines.

The method may comprise determining, by the device and responsive to the change in the energy flow composition in at least one of the first power lines, the resultant change in the energy flow composition of the (overall) energy inflow. The method may comprise determining, by the device and responsive to the change in the energy flow composition in at least one of the first power lines, a control action (such as selectively powering on or powering off an energy-consuming device or system), based on the determined energy flow composition of the (overall) energy inflow.

Thereby, the method comprises performing a control action in dependence on a change in the energy flow composition of the (overall) energy inflow.

The device may receive the several first messages in a plurality of first message streams.

Thereby, the device may receive the first messages continually (i.e., on an ongoing basis) and is therefore continually made aware of the energy flow composition of the inflow.

The plurality of first message streams may comprise or may consist of synchronized streams.

Thereby, the propagation of the first and/or second messages is implemented in a synchronous manner, causing a new round of propagation of the energy flow composition information throughout the communication system. The repeated propagation may be done in time intervals that may be constant or time varying.

The plurality of first message streams comprising at least two unsynchronized streams.

Thereby, changes in energy flow composition can be propagated more rapidly as compared to synchronous streams.

The several different energy source types may comprise at least one renewable energy source and at least one non-renewable energy source.

Thereby, the changes in energy flow composition that are particularly relevant in view of carbon footprint can be propagated. This enables control actions to be taken by consumer nodes, which control actions are dependent on the fractional or absolute contribution of energy sources that are not renewable energy sources to the energy inflow of the consumer node.

The several different energy source types may comprise different types of renewable energy sources (such as wind and solar), and the data may specify the contributions of the different types of the renewable energy sources in the energy inflow or outflow of the power grid node.

Thereby, even more fine-grained information on the energy sources that respectively contribute, at any given time, to the energy inflow may be provided. This may be useful to perform control actions that are dependent on the type of renewable energy source, e.g., in view of pricing.

The several different energy source types may comprise different types of non-renewable energy sources (such as gas, coal, nuclear power), and the data may specify the contributions of the different types of the non-renewable energy sources in the energy inflow or outflow of the power grid node.

Thereby, even more fine-grained information on the energy sources that respectively contribute, at a given time, to the energy inflow may be provided. This may be useful to perform control actions that are dependent on the type of renewable energy source, e.g., in view of avoiding waste or prioritizing cleaner conventional energy sources (such as gas) over others (such as coal and nuclear power). This enables control actions to be taken by or at consumer nodes, which control actions are dependent on the fractional or absolute contributions of energy sources that are not renewable energy sources to the energy inflow at the consumer node.

Each first message of the at least one first message may comprise a signature.

Thereby, the message can be authenticated. Tracking and authentication of messages along the power flow paths is made possible.

The method may further comprise verifying, by the device, authenticity of the at least one first message based on the signature.

Thereby, tracking and authentication of messages along the power flow paths is made possible. This reduces or eliminates the risk of unauthorized tampering with the energy flow composition information, which is propagated through the communication system.

The signature may be dependent on all power grid nodes positioned along several pathways from energy sources to the power grid node which contribute to the energy inflow of the power grid node.

Thereby, tracking and authentication of messages along the power flow paths is made possible. This reduces or eliminates the risk of unauthorized tampering with the energy flow composition information, which is propagated through the communication system.

The method may further comprise processing, by the device, the at least one first message to determine the energy flow composition of the energy inflow of the power grid node.

Thereby, the device can ascertain the energy flow composition of its (overall) inflow.

When the power grid node receives an energy inflow from only a single first power grid node, determining the energy flow composition of the energy inflow may comprise retrieving the data defining the energy flow composition from the first message received by the device associated with the power grid node. When the power grid node receives an energy inflow from several first power grid nodes, determining the energy flow composition of the energy inflow may comprise retrieving the data defining the energy flow composition and data quantifying the energy flow for each of several first power lines via which the energy inflow is received, and determining the energy flow composition based thereon (e.g., by determining the absolute energy flows from different source types for the several first power lines, summing all energy flows from a same source type, and determining the fractional contribution of each of the different source types by dividing the energy flow from that source type by the overall energy flow received over the several first power lines).

Thereby, the device can ascertain the energy flow composition of its (overall) inflow.

The method may further comprise causing, by the device, an action based on the energy flow composition of the energy inflow of the power grid node.

Thereby, the device may automatically or semi-automatically take the action responsive to and based on the energy flow composition of the energy inflow of the power grid node. This facilitates control actions that are dependent on the fractional or absolute amount of energy inflow stemming from renewable energy sources and/or the fractional or absolute amount of energy inflow stemming from (different types) of non-renewable energy sources.

The action may comprise generating the at least one second message, wherein the at least one second message may specify the energy flow composition of the energy outflow provided by the power grid node.

Thereby, when the device is associated with the power grid node that is an intermediate power grid node of a power transmission grid or a power distribution grid, the device can propagate information on the energy flow composition towards one or several second devices that are associated with any second power grid node that receives an energy inflow from the power grid node. Thereby, the propagation of data indicative of the energy flow composition to a consumer node device associated with a consumer node is enabled.

The method may comprise generating and outputting several second messages, each directed to one of several second devices that are associated with several second power grid nodes, each of the several second power grid nodes being (e.g., directly) connected to the power grid node with one of several second power grid lines and receiving an energy inflow from the power grid node.

Thereby, when the device is associated with the power grid node that is an intermediate power grid node of a power transmission grid or a power distribution grid, the device can propagate information on the energy flow composition towards several second devices that are associated with the several second power grid nodes that receive an energy inflow from the power grid node. Thereby, the propagation of data indicative of the energy flow composition to a consumer node device associated with a consumer node is enabled.

The action may further comprise detecting, by the device, a trigger event (such as a change in the energy flow composition of the energy inflow of the power grid node or expiry of a timer), and responsive to detecting the change, repeating the generation of the at least one second message to propagate information on time-dependent changes in the energy flow composition of the energy outflow.

Thereby, information on the power flow composition is propagated in a manner which ensures that any second device associated with a second power grid node that receives an energy inflow from the power grid node is informed of changes in energy flow composition in a timely manner. This ensures freshness of the energy flow composition information as propagated along

The action may comprise controlling at least one energy consumer as a function of time based on the energy flow composition of the energy inflow of the power grid node.

Thereby, when the device is associated with a consumer node, the device can automatically or semi-automatically perform control operations that affect energy consumption in dependence on the energy flow composition received.

The action may comprise controlling the at least one energy consumer in a time-dependent manner, based on time-resolved energy flow composition information received by the device in the at least one second message.

Thereby, energy consumers can be controlled based on variations in the energy flow composition indicated by the data received by the device (e.g., in a series of second messages that are received time-sequentially) and indicative of temporal variations in the energy flow composition.

Controlling the at least one energy consumer may comprise controlling an industrial, residential, infrastructural or other energy consumer (such as an industrial energy consumer, e.g., a furnace, and/or a residential energy consumer, e.g., a washing machine or dishwasher and/or electric vehicle charging equipment).

Thereby, energy consumption can be shifted automatically or semi-automatically (e.g., pending a user confirmation) to time periods in which the energy flow composition of the energy inflow of a consumer node fulfills a certain criterion (such as having a fraction and/or absolute energy flow amount stemming from renewable energy source(s) that meets a threshold criterion).

The action may comprise providing information on the energy flow composition via a human machine interface (HMI) or enabling the information on the energy flow composition to be used for HMI output operations. The action may comprise an HMI control action to provide the information on the energy flow composition received, e.g., at a consumer node.

Thereby, information on the energy flow composition is used for HMI control operations. This enhances awareness for environmental consequences associated with the energy flow composition as presently received.

The method may comprise updating, when the device is associated with an energy storage system node (such as a battery energy storage system (BESS) and/or a kinetic energy storage system (such as a flywheel storage system)) of the electric power system, data specifying the stored energy composition of energy stored in the energy storage system responsive to receiving the at least one first message. Alternatively or additionally, the method may comprise generating, when the device is associated with the energy storage system node of the electric power system, at least one second message specifying the energy flow composition of an energy outflow of the energy storage system node.

Thereby, track is kept of the sources that contributed to an energy inflow of, e.g., a consumer node, even when the energy is intermittently stored in the energy storage system.

The device may be associated with an energy source node of the electric power system. The method may comprise generating and transmitting, by the device, the at least one second message comprising the data specifying the energy flow composition generated by the energy source node. The device may transmit a second message comprising the data specifying the energy flow composition generated by the energy source node to second devices, each of which is associated with a second power grid node (directly) coupled to the energy source node via a second power line.

Thereby, energy flow composition information can be propagated starting from the source nodes all the way to the consumer nodes.

The device, irrespective of whether it is associated with an energy source node, an intermediate power grid node of a transmission or distribution grid, or a consumer node, may be operative to exchange the data related to the energy flow composition continually (i.e., on an ongoing basis) during operation. The device, irrespective of whether it is associated with an energy source node, an intermediate power grid node of a transmission or distribution grid, or a consumer node, may be operative to perform the transmission and/or receipt of message(s) carrying the data indicative of the energy flow composition in a recurring manner, e.g., periodically or aperiodically. The device, irrespective of whether it is associated with an energy source node, an intermediate power grid node of a transmission or distribution grid, or a consumer node, may be operative such that receipt of the at least one first message (related to the energy flow composition of energy inflows) and/or transmission of the at least one second message (related to the energy flow composition of energy outflows) is/are repeated after a repetition time that may be 60 minutes or less, 30 minutes or less, 15 minutes or less, or 10 minutes or less.

Thereby, information on the energy flow composition is made available at the consumer node (e.g., received by the device associated with the consumer node) in a time-dependent manner, allowing appropriate action(s) to be taken based on the energy flow composition of the energy inflow as it is presently available.

The device, the at least one first device, and/or the at least one second device may respectively be or comprise a terminal unit (such as a remote terminal unit) of a communication system associated with primary system equipment of the electric power system. The device, the at least one first device, and/or the at least one second device may respectively be or comprise a gateway device of a communication system associated with primary system equipment of the electric power system.

Thereby, the communication and control infrastructure deployed in association with primary system equipment of the electric power system is utilized to propagate information on the energy flow composition along the energy flow paths of the electric power system.

The remote terminal unit or the gateway device may be operative to perform at least one protection and/or control function, such as a distance protection function, a time domain protection function, a primary system equipment control function acting on primary system equipment, without being limited thereto.

Thereby, the communication and control infrastructure deployed in association with primary system equipment of the electric power system is utilized to propagate information on the energy flow composition along the energy flow paths of the electric power system.

The data indicative of the energy flow composition may comprise one or several 2-tuples specifying an energy source type and the fractional contribution of that energy source type to the energy flow in a power line of the electric power system.

Thereby, the contributions made by several energy source types to the energy flow in any power line of the electric power system can be communicated in an efficient manner that allows the information to be propagated from source devices associated with the energy source nodes to consumer devices associated with the consumer modes.

The method may be performed automatically by the device according to an aspect or embodiment, a communication system according to an aspect or embodiment, or the electric power system according to an aspect or embodiment.

The method may be performed by or using the device to control, based on the energy flow composition information, at least one controllable component (such as primary system equipment of the electric power system, an energy consumer which may be an industrial or residential consumer, periphery equipment such as an HMI).

According to a further aspect of the invention, there is provided a control method, comprising performing the method according to an aspect or embodiment and causing, by the device, at least one control action to be performed based on the exchanged data. The control action may comprise one, several, or all of: switching energy consumers (such as charging stations) on and off, based on the data indicative of the energy flow composition;

Thereby, the effects attained in association with the method are attained and utilized in a control method.

According to a further aspect of the invention, there is provided an operating method of operating primary system equipment and/or secondary system equipment of an electric power system (e.g., of a power distribution grid and/or a power transmission grid), comprising performing the method according to an aspect or embodiment to propagate information on the energy flow composition along all energy flow paths through the electric power system.

Thereby, the effects attained in association with the method are attained and utilized in a method of operating electric power system equipment.

According to a further aspect, there is provided machine-readable instruction code which, when executed by at least one programmable processing circuit, causes the at least one programmable processing circuit to perform the method of propagating information on energy flow compositions, the control method, or the operation method according to any aspect or embodiment disclosed herein.

According to a further aspect, there is provided a non-transitory storage medium having stored thereon machine-readable instruction code which, when executed by at least one programmable processing circuit, causes the at least one programmable processing circuit to perform the processing method, the method of propagating information on energy flow compositions, the control method, or the operation method according to any aspect or embodiment disclosed herein.

According to another aspect of the invention, there is provided a device for use in association with a power grid node of a power grid. The device comprises at least one data interface, and at least one processing circuit coupled to the at least one data interface and operative to control the at least one data interface to exchange data indicative of an energy flow composition, the energy flow composition being a composition by energy source type. The device is operative such that exchanging the data comprises: receiving at least one first message from at least one first device associated with at least one first power grid node, wherein the power grid node receives an energy inflow from the at least one first power grid node, and/or transmitting at least one second message to at least one second device associated with at least one second power grid node, wherein the power grid node provides an energy outflow to the at least one second power grid node.

Various effects and advantages are attained by the device. The device is operative to establish an exchange of data in messages (i.e., the first and/or second message(s)) that respectively carry information on the energy flow composition between a pair of different nodes of the power grid that are connected to each other. The device is operative to propagate information on the energy flow composition such that the message flow follows the energy flow in the sense that, responsive to an energy inflow at the power grid node from one or several first power grid nodes to which the power grid node is connected by associated power grid lines (without any intervening nodes therebetween), there is an accompanying flow of messages received by the device associated with the power grid node, each of the messages carrying information on the energy flow composition of the energy inflow at the power grid node. The device is operative such that the message flow follows the energy flow in the sense that, responsive to an energy outflow from the power grid node to one or several second power grid nodes to which the power grid node is connected by associated power grid lines (without any intervening nodes therebetween), there is an accompanying transmission of messages by the device associated with the power grid node, each of the messages carrying information on the energy flow composition of the energy inflow at the power grid node. Thereby, the device is operative to establish a flow of messages, each carrying information on the energy flow composition of energy transmitted over a power grid line (e.g., of a single power grid line) of the power grid, in a communication system of an electric power system. The device is operative such that information on the energy flow composition (which specifies the contribution of different energy source types to the energy inflow and/or energy outflow of the power grid node) can be propagated in the communication system. The device is operative such that information on the energy flow composition can be propagated from the energy source nodes of the power grid to a device associated with one of the consumer nodes of the power grid, thereby providing quantitative information on the contributions of different energy source types to the energy inflow of the consumer node.

The device may be operative to perform or participate in performing the method according to any aspect or embodiment disclosed herein.

The device may be operative such that each of the messages (i.e., each of the first messages and/or of the second messages) may comprise time data specifying a time interval for which the energy flow composition information is provided, the data indicative of an energy flow composition, and a signature.

Thereby, the device is operative to propagate the information on the energy flow composition in a time-dependent manner (specifying the time interval to which the data apply), while allowing the origin and/or authenticity of the messages to be verified based on the signatures.

The device may be operative such that signature may comprise a signature for authentication.

Thereby, the device is operative to propagate the information on the energy flow composition in a time-dependent manner (specifying the time interval to which the data apply), while allowing the authenticity of the messages to be verified based on the signatures.

The device may be operative to apply Kirchhoff's junction rule (specifying that the sum of the outgoing currents is equal to the sum of incoming currents at the node with which the device is associated) to determine the data indicative of the energy flow composition for outgoing current flows, which are included in the at least one second message.

Thereby, the device can generate the data specifying the energy flow composition for outgoing current flow(s) can be generated based on the data specifying the energy flow composition for incoming current flow(s), and can include them in the second message(s).

The device may be an energy source node device operative to be associated with an energy source node. The device may be an RTU or gateway device for the energy source node. The device may be operative to generate and output the at least one second message to the at least one second device, the at least one second message comprising the data indicative of the energy flow composition provided in an energy outflow of the energy source node.

Thereby, the device is operative to propagate the information on the energy flow composition starting at an energy source node.

The device may be an intermediate power grid node device operative to be associated with an intermediate power grid node (i.e., a power grid node intermediate between energy sources and energy consumers). The device may be an RTU or gateway device for the intermediate power grid node. The device may be operative to receive one or several first messages, each indicating the energy flow composition in an associated first power grid line through which the intermediate power grid node receives an energy inflow, to determine the energy flow composition of the (overall) energy inflow of the power grid node based on the energy flow composition(s) in the first power grid line(s), and to generate and output the at least one second message to the at least one second device, the at least one second message comprising the data indicative of the energy flow composition provided in an energy outflow of the intermediate power grid node.

Thereby, the device is operative to propagate the information on the energy flow composition as energy flow traverses nodes of the power transmission grid and/or of the power distribution grid.

The device may be a consumer node device operative to be associated with a consumer node. The device may be a gateway device, such as a meter device, for the consumer node. The device may be operative to receive one or several first messages, each indicating the energy flow composition in an associated first power grid line through which the consumer node receives an energy inflow, to determine the energy flow composition of the (overall) energy inflow of the consumer node based on the energy flow composition(s) in the first power grid line(s), and to cause an action based on the energy flow composition of the (overall) energy inflow of the power grid node

Thereby, the device is operative to utilize the energy flow composition information propagated to the device along the energy flow paths that terminate at the consumer node.

The device may be operative such that the action comprises a control action, such as selectively activating or deactivating at least one energy consumer, an HMI control action, or another interface control action that enables the energy flow composition information to be used for control operations.

Thereby, the device is operative to utilize the energy flow composition information propagated to the device along the energy flow paths that terminate at the consumer node.

The device may be an energy storage system device operative to be associated with an energy storage system node (such as a battery energy storage system (BESS) and/or a kinetic energy storage system (such as a flywheel storage system)) of the electric power system. The energy storage system device is operative to update data specifying the stored energy composition of energy stored in the energy storage system responsive to receiving the at least one first message when the energy storage system is charged. The energy storage system device is operative to generate, when the energy storage system is discharged, at least one second message specifying the energy flow composition of an energy outflow of the energy storage system node.

Thereby, track is kept of the energy sources that contributed to an energy inflow of, e.g., a consumer node, even when the energy is intermittently stored in the energy storage system.

According to another aspect of the invention, there is provided a communication system operative for use with a power grid, the communication system comprising at least two devices according to an aspect or embodiment.

Thereby, the effects and advantages disclosed in association with the device are attained.

The communication system may comprise at least one energy source device associated with an energy source node, at least one consumer device associated with an energy consumer node, and at least one intermediate power grid node device associated with a power grid node intermediate between the energy source node and the consumer node, each of these devices being respectively a device in accordance with an aspect or embodiment.

Thereby, information on the energy flow composition can be propagated along the energy flow path(s) from the energy source(s) to the energy consumer(s).

The communication system may further comprise at least one energy storage system device associated with an energy storage system node according to an aspect or embodiment.

Thereby, information on the energy source(s) that contributed to the energy inflow of a consumer node can be propagated even when the energy is intermittently stored at the energy storage system node.

According to another aspect of the invention, there is provided an electric power system. The electric power system comprises a power grid comprising a plurality of power grid nodes, and a communication system for propagating information on power grid energy flows, the communication system comprising at least one device in accordance with an aspect or embodiment. The communication system may be the communication system according to an aspect or embodiment.

Thereby, the effects and advantages disclosed in association with the device are attained in the electric power system.

Various effects and advantages are attained by embodiments of the invention. For illustration, the method, device, communication system, and electric power system provide enhanced techniques for making information related to energy flows in a power grid available. The method, device, communication system, and electric power system are operative to provide information related to an energy composition that specifies the contributions of different energy sources types to an energy flow, along all energy flow legs from energy source(s) to energy consumer(s). The method, device, communication system, and electric power system are operative to provide information related to an energy composition that specifies the contributions of different energy sources types to the energy flow to consumers of the electric power grid. The method, device, communication system, and electric power system make it possible to implement actions that are dependent on the energy flow composition, so as to reduce or possibly even eliminate the environmental impact of energy consumption at a consumer node.

### BRIEF DESCRIPTION OF THE DRAWINGS

Embodiments of the invention will be described with reference to the drawings in which similar or identical reference signs designate elements with similar or identical configuration and/or function.
Fig. 1 is a schematic representation of an electric power system comprising a power grid and a communication system.
Fig. 2 is a flow chart of a method of propagating energy flow composition information.
Fig. 3 is a schematic representation of a device.
Fig. 4 is a flow chart of a method of propagating energy flow composition information.
Fig. 5 is a schematic representation of a device operative to be associated with an intermediate power grid node of a power transmission or distribution grid.
Fig. 6 is a schematic representation of first messages received by the device of Fig. 5 and second messages generated by the device of Fig. 5.
Fig. 7 is a flow chart of a method of propagating energy flow composition information that may be performed by the device of Fig. 5.
Fig. 8 is a schematic representation of a device operative to be associated with a consumer node of a power grid.
Fig. 9 is a schematic representation of first message(s) received by the device of Fig. 8.
Fig. 10 is a flow chart of a method of propagating energy flow composition information that may be performed by the device of Fig. 8.
Fig. 11 is a schematic representation of a device operative to be associated with an energy storage node of a power grid.
Fig. 12 is a schematic representation of first message(s) received by the device of Fig. 11 and of second message(s) generated by the device of Fig. 11.
Fig. 13 is a flow chart of a method of propagating energy flow composition information that may be performed by the device of Fig. 11.
Fig. 14 is a flow chart of a method of propagating energy flow composition information that may be performed by the device of Fig. 11.
Fig. 15 is a flow chart of a method of propagating energy flow composition information that may be performed by the device of Fig. 11.
Fig. 16 is a schematic representation of a device operative to be associated with an energy source node of a power grid.
Fig. 17 is a schematic representation of second message(s) generated by the device of Fig. 16.
Fig. 18 is a flow chart of a method of propagating energy flow composition information that may be performed by the device of Fig. 16.
Fig. 19 is a schematic representation of an electric power system comprising the device according to an embodiment.
Fig. 20 is a schematic representation of an electric power system comprising a communication system comprising several devices according to an embodiment.
Fig. 21 is a schematic representation of an electric power system comprising a communication system comprising several devices according to an embodiment.
Fig. 22 is a flow chart of a method.
Fig. 23 is a flow chart of a method.
Fig. 24 is a schematic representation of a system comprising the device according to an embodiment.
Fig. 25 is a schematic representation of an electric power system.
Fig. 26 is a schematic representation of an electric power system.

### DETAILED DESCRIPTION OF EMBODIMENTS

Embodiments of the invention will be described with reference to the drawings. In the drawings, similar or identical reference signs designate elements with similar or identical configuration and/or function.

Embodiments relate to devices, systems, and methods capable of propagating data indicative of an energy flow composition along a communication system of an electric power system.

As used herein, the term "electric power system" encompasses an electric power generation, transmission, and/or distribution system, e.g., an electric power grid or parts thereof.

As used herein, the term "power grid" encompasses a power transmission grid and/or a power distribution grid. The power grid may comprise both a power transmission grid and a power distribution grid. The term "power grid" encompasses a microgrid, optionally a microgrid comprising a distributed energy resource (DER).

As used herein, the term "energy flow composition" encompasses data that specifies the fractional or absolute contribution to an energy flow (i.e., the energy per time interval) provided by one or several energy source type(s), or data that allows a device or system to determine the fractional or absolute contribution to an energy flow that stems from any one of a set of different energy source type(s). The energy flow composition is communicated respectively for each of several time intervals. The energy flow composition is variable in the sense that it can change from one time interval to another time interval of the several time intervals. Thus, while reference will be made to at least one first/second message, it is understood that the device and method are operative to transmit or receive a series of first/second messages as the energy flow composition varies in a time-dependent manner.

As used herein, "data specifying the energy flow composition" may have any one of a variety of formats. For illustration, the data may comprise at least one tuple, typically several tuples, each comprising an identifier for an energy source type and the contribution (e.g., the fractional contribution) provided by that energy source type to an energy flow to which the message relates. The data is not particularly limited, as long as it allows a recipient device that receives a message comprising the data to determine which types of energy sources contribute to what (quantitative) extent to the energy flow in a power line. Various technical variables may be transmitted that each allow the fractional or absolute values of energy flow contributions by different energy source types to be established.

As used herein, the term "energy source type" may encompass at least renewable energy sources and non-renewable energy sources. In some implementations, the energy source type is selected from a set comprising these two alternatives, namely an energy source type that is any renewable energy source and another energy source that is any non-renewable energy source. In other implementations, the energy source type is defined more accurately in the sense that the energy flow composition defines the composition by energy source type for energy source types selected from a set comprising at least two different types of renewable energy sources (such as two or more selected from solar, wind, water, tidal, biogas) and/or at least two different types of non-renewable energy sources (such as two or more of coal, gas, nuclear).

As used herein, the term "power grid node" encompasses energy source nodes and energy consumer nodes. I.e., the term "power grid node," as used herein, is not limited to nodes that have at least two power lines connected thereto, but also encompasses nodes that may potentially be connected to the remainder of the power grid by a single line only.

As used herein, the term "message" encompasses data packets. The message may comprise a header. The message may comprise a signature. The signature may be a signature that enables authentication. Preferably, the signature may be a signature that enables a device to verify the authenticity along all devices of the communication system that have contributed to the data specifying the energy flow composition information in the message. The signature may be dependent on the intended recipient device of the message. Thus, when a device transmits several second messages, each including information on a same energy flow composition of the energy flow in each of several power lines, the messages need not be identical. In particular, the signatures may vary from one message to another, depending on the intended recipient device.

Messages may be received and/or generated in message streams. As used herein, the term "message stream" encompasses synchronized message transmissions and unsynchronized message transmissions.

As used herein, the term "device" encompasses integral units, but also distributed devices that may comprise several distinct device components. The term "device" encompasses RTUs and/or gateway devices, in particular when the device is operative to be used in association with a power grid node other than a consumer node. The term "device" encompasses a smart meter and/or a consumer node control device (such as a smart home control device), in particular when the device is operative to be used in association with a consumer node.

As used herein, a device is considered to be "associated with" a power grid node if it can perform functions (such as monitoring, control, and/or protection functions) related to the power grid node. A device that is associated with a power grid node may be collocated with the power grid node. I.e., a device that is associated with a power grid node may be arranged at the respective power grid node.

As used herein, terms such as "first, second, etc." are used to distinguish different devices, power lines, and/or messages in accordance with their operation. The terms do not imply a chronological or other sequence. The presence of a "second" integer (such as a second device or a second power line) does not imply that there need be a "first" integer.

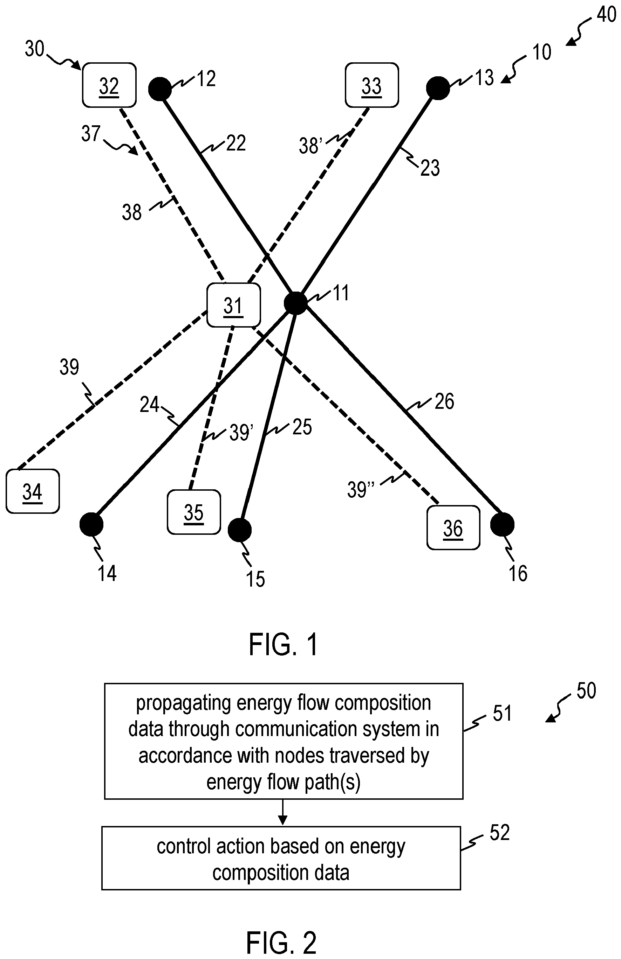

Fig. 1 shows a schematic representation of an electric power system 40. The electric power system 40 comprises a power grid 10 and a communication system 30. The power grid 10 comprises a plurality of power grid nodes that are directly interconnected by power lines. The power grid 10 may comprise a power grid node 11. The power grid 10 may comprise a first power grid node 12 and a further first power grid node 13. The power grid node 11 may be directly connected to the first power grid node 12 by a first power line 22. The power grid node 11 may be directly connected to the further first power grid node 13 by a further first power line 23.

The power grid 10 may comprise a second power grid node 14, a further second power grid node 15, and a still further second power grid node 16. The power grid node 11 may be directly connected to the second power grid node 14 by a second power line 24. The power grid node 11 may be directly connected to the further second power grid node 15 by a further second power line 25. The power grid node 11 may be directly connected to the still further second power grid node 16 by a still further second power line 26.

The second power grid node 14, the further second power grid node 15, and the still further second power grid node 16 may respectively be consumer nodes. The power grid node 11 may be an intermediate power grid node intermediate between an energy source node and one or several consumer nodes of the power grid 10. For illustration, the power grid node 11 may be the power grid node at a terminal of a power transmission line of a power transmission grid. For further illustration, the power grid node 11 may be the power grid node at a terminal of a power distribution line of a power distribution grid.

The first power grid node 12 and the further first power grid node 13 may be energy source nodes that represent energy sources having different energy source types (such as an energy source type corresponding to a renewable energy source and another energy source type corresponding to a non-renewable energy source). The first power grid node 12 and the further first power grid node 13 may also be intermediate power grid nodes intermediate between an energy source node and one or several consumer nodes of the power grid 10. The first power grid node 12 and the further first power grid node 13 may also be energy storage systems nodes.

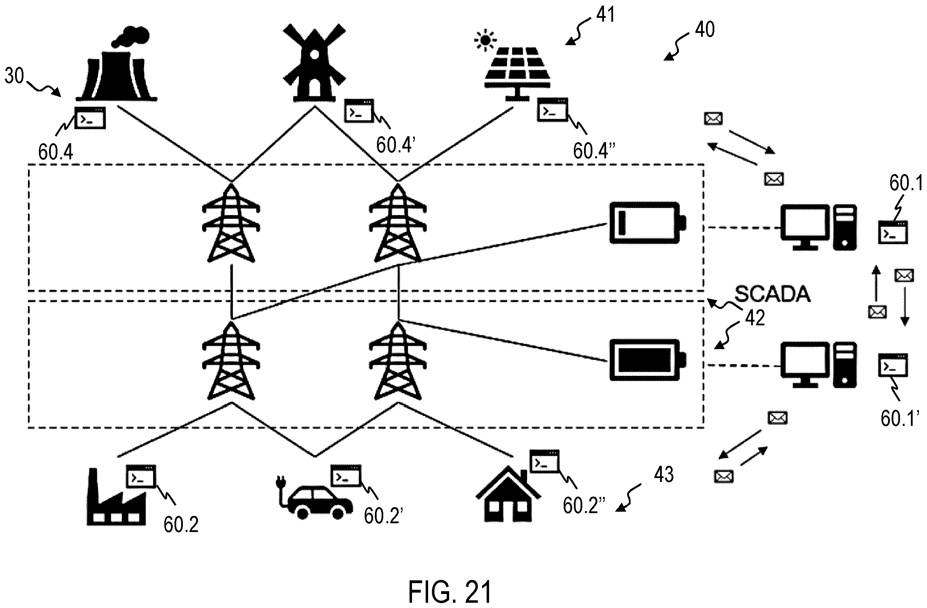

The communication system 40 comprises a plurality of devices 31, 32, 33, 34, 35, 36. Each of the plurality of devices is respectively associated with at least one power grid node. While operation of devices, methods, and systems will initially be explained with reference to an electric power system 40 in which there is a one-to-one correspondence between device and power grid node, the techniques disclosed herein are not limited thereto. For illustration, and as will be explained in more detail with reference to Fig. 21, a device that propagates energy flow composition information may be associated with a part of a power grid, such as a part that is under the control of a same supervisory control and data acquisition (SCADA) system.

The plurality of devices 31, 32, 33, 34, 35, 36 may comprise at least some devices operative to perform control or other functions related to the power grid node which the respective device is associated. For illustration, the devices 31, 32, 33, 34 may comprise RTUs and/or gateway devices. The RTUs may be operative to perform control operations acting on primary system equipment of the electric power grid 10, without being limited thereto. The plurality of devices 31, 32, 33, 34, 35, 36 may comprise at least some devices 34, 35, 36 associated with consumer nodes, which may be control devices operative to perform control actions such as controlling controllable loads (such as curtailable loads), controlling an HMI to provide information on the energy flow composition received by the respective consumer node 14, 15, 16 at the respective point in time, or performing other control operations. The control operations may be dependent on the energy flow composition as specified by one or several messages received by the respective device 34, 35, 36.

The communication system 30 comprises communication links 37 that allow messages to be exchanged between at least devices associated with two power grid nodes that are directly connected by a power line 22, 23, 24, 25, 26. The communication links 37 may be implemented as point-to-point links, but are not limited thereto. The communication links 37 may comprise communication links operative to perform inter-substation communication (e.g. in a manner that is compatible with IEC 61850 in the most recent revision in force or published at the priority date of this application). The communication system 30 is operative to establish a flow of messages, each carrying data indicative of an energy flow composition in a power line, that is propagated through the communication system 30 in a manner that is dependent on (e.g., that mimics) the energy flow paths through the power grid 10. Thereby, information on the energy flow composition is not only available in the power transmission of a power distribution grid, but can also be made available to and used by the consumer node devices 34, 35, 36.

The devices of the communication system 30 may be operative to establish the communication links 37 or to use existing communication links 37 for message transmission and receipt. For illustration, the device 31 associated with the power grid node 11 may be operative to receive, via a first communication link 38, a first message from the first device 32 associated with the first power grid node 12, if and when the power grid node 11 receives an energy inflow from the first power grid node 12 via the first power line 22. The first message comprises data specifying quantitatively the contributions of different energy source types to the energy flow in the power line 22 that directly connects the power grid node 11 with the first power grid node 12.

For further illustration, the device 31 associated with the power grid node 11 may be operative to receive, via a further first communication link 38', a further first message from the further first device 33 associated with the further first power grid node 13, if and when the power grid node 11 receives an energy inflow from the further first power grid node 13 via the further first power line 23. The further first message comprises data specifying quantitatively the contributions of different energy source types to the further energy flow in the further power line 22 that directly connects the power grid node 11 with the further first power grid node 13.

The device 31 is operative to process the first message and, if applicable, the further first message. The device 31 may be operative to perform, based on signatures included in the first message and the further first message, an authentication to ensure that the first message and the further first message were not tampered with. The device 31 is operative to process information on the energy flow composition for the energy flows in the first power line 22 and the further first power line 23, to thereby contribute quantitatively the contributions of different energy source types to the overall energy inflow of the power grid node 11. The device 31 is operative to generate several second messages and transmit the several second messages to the second device 34, the further second device 35, and the still further second device 36, respectively via an associated communication link 39, 39', 39". The device 31 may be operative to generate the several second messages such that they each include the same energy flow composition information, it is determined based on the data specifying the energy flow composition for the energy inflow of the power grid node 11 in the first power line 22 and the further first power line 23. The device 31 may be operative to generate the several second messages such that they each include a signature. The signature may be dependent on at least all first messages received by the device 31, which contribute to the energy flow composition determined for the energy flows in the second power line 24, the further second:25, and the still further second power line 26.

The second device 34 may be operative to perform at least one control action based on the energy flow composition information propagated to the second device 34 through the communication system 30, in accordance with the energy flow paths in the power grid 10. Thus, a second device 34 (such as a consumer node device 34), may be operative to receive at least one second message that is based on the energy flow composition information propagated through several data communication paths in the communication system 30, in accordance with the energy flow path in the power grid 10. In other words, the electric power system 40 is operative such that a second device 34 (such as a consumer node device 34) receives one or several second messages, which are based on and include an energy flow composition information propagated through sets of devices in the communication system 30 along any of several energy flow paths through which the consumer node 14 with which the second device 34 is associated receives an incoming energy flow generated by any one of several energy source types.

The number of power grid nodes, the number of devices associated with the power grid nodes, and the topology of the power grid 10 as illustrated in Fig. 1 is merely exemplary.

The devices of the communication system 30, each of which is associated with at least one power grid node, are operative to exchange data indicative of an energy flow composition, which specifies the contributions of different types of energy sources to an energy flow. The devices are operative to attain this by exchanging messages to establish a message flow that follows the energy flow path in the power grid 10.

Fig. 2 is a flow chart of a method 50 of propagating information related to energy flow composition of energy flows in an electric power system 40. The method 50 may be performed automatically by the communication system 30 or by the electric power system 40.

At process block 51, one or several devices of the communication system 30 propagated data indicative of an energy flow composition. The information is propagated in accordance with the energy flow paths in the power grid 10. Thereby, a consumer node device 34 associated with a consumer node 14 of the power grid 10 receives information on the energy flow composition in each power line by which the consumer node 14 receives an incoming energy flow. The information on the energy flow composition is based on a series of messages that are respectively transmitted between devices, such as RTUs, along any energy flow path prior which the consumer node 14 receives an energy inflow from any one or any combination of energy source nodes of the power grid 10.

At process block 52, a control action is performed based on the data indicative of the energy flow composition. The control action may comprise an interface control action to generate and output a message indicative of the received energy flow composition. The control action may comprise a selective load curtailment, selective switching on and/or switching off of energy-consuming devices or systems at the consumer node, selective control of the primary system equipment of the power grid, or other control actions.

The communication system 30 and the method 50 may be operative such that the transmission and/or reception of messages carrying data indicative of an energy flow composition is repeated in an ongoing manner during operation of the electric power system 40. For illustration, the devices of the communication system 30 may respectively be operative to exchange data indicative of the energy flow composition in a periodically or aperiodically repeating manner. Thereby, the information on the energy flow composition is made available at the consumer nodes (such as consumer nodes 14, 15, 16) in a time-resolved manner. This allows control actions to be taken in dependence on which types of energy sources actually contribute, at a given point in time, to the energy flow received at the consumer node 14, 15, or 16.

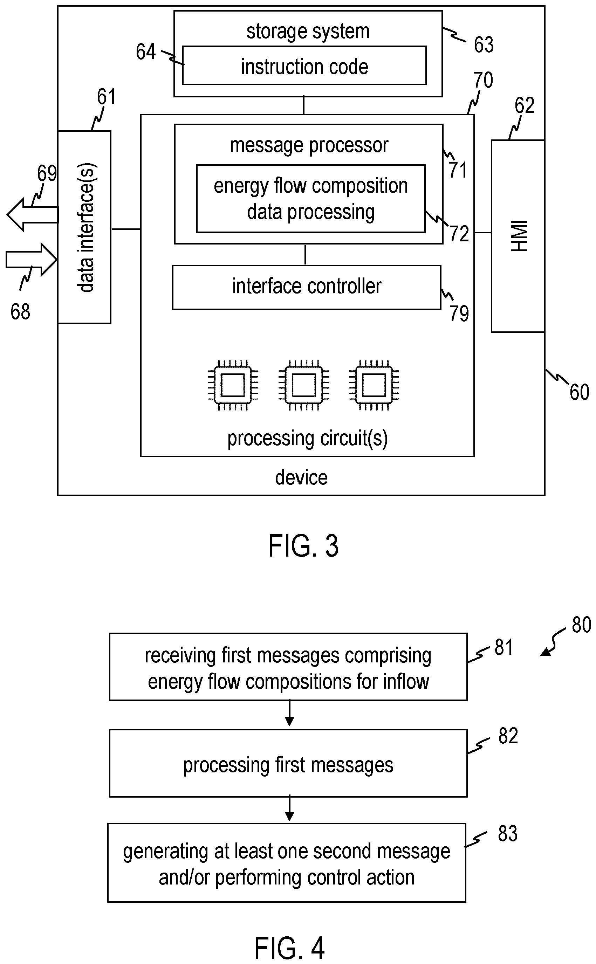

Fig. 3 shows a block diagram representation of a device 60. The device 60 may be a control and/or monitoring device, such as an RTU. The device 60 may be a communication system device, such as a gateway device, that may but does not necessarily need to perform control and/or monitoring operations for primary power system equipment.

The device 60 comprises at least one data interface 61 operative to receive at least one first message 68 and/or to output at least one second message 69. The at least one first message 68 and/or to output at least one second message 69 respectively comprises data indicative of an energy flow composition in a power line connected to a power grid node with which the device 60 is associated. The at least one data interface 61 may comprise a communication interface operative to receive and/or transmit the first and/or second messages over a dedicated communication infrastructure of an electric power system, such as a field bus system, inter-substation communication links, or other communication links.

The device 60 comprises at least one processing circuit 70. The at least one processing circuit 70 may be operative to access instruction code 64 stored in a storage system 63 and to execute the instruction code 64 to perform the operations discussed in detail herein. The storage system 63 may be integrated into the device 60 or may be a component separate from the device 60.

The at least one processing circuit 70 is operative to execute a message processor 71. The message processor 71 is operative to exchange and process data indicative of an energy flow composition. The message processor 71 may be operative to process one or several first messages 68 carrying data indicative of an energy flow composition. Each of the first message(s) 68 may specify the contributions made by different energy source types to the electric energy flowing, in a time interval, through an associated one of the first power lines via which the power grid node with which the device 60 is associated. The message processor 71 may alternatively or additionally be operative to generate one or several second messages 68 carrying data indicative of an energy flow composition. Each of the first message(s) 68 may specify the contributions made by different energy source types to the electric energy flowing, in the time interval, through an associated one of the second power lines via which the power grid node provides energy outflow to one or several second power grid nodes.

When the device 60 is associated with a power grid node that provides an energy outflow, via one or several second power lines, to one or several second power grid nodes, the device 60 is operative to determine the energy flow composition and generate the second message(s) 68 to be indicative of the energy flow composition in each of the outgoing power lines. The device 60 may be operative to determine the energy flow composition for energy flow in the outgoing second power lines based on the energy flow composition for the incoming first power lines, as specified by the first message(s). The device 60 may be operative to be associated with an energy source node and may, in this case, generate the second message(s) 68 to indicate a 100% contribution of the energy source node type to the energy flow composition in each outgoing second power line. In the latter case, the device 60 may be operative to allow the energy source node type to be configured in the device 60, e.g., via an HMI 62.

The device 60 is operative to perform at least one control action that is dependent on the energy flow composition of an energy inflow and/or an energy outflow of the power grid node with which the device 60 is associated. The device 60 may comprise an interface controller 79, which may be operative to control the at least one data interface 61 to output the second message(s) 69 and/or to perform control actions affecting primary equipment of the power grid (such as by selectively controlling energy transmission and/or energy distribution based on the energy flow composition received by a power grid node) and/or to perform control actions affecting energy-consuming devices or systems of a consumer. The device 60 may alternatively or additionally be operative to perform an HMI control action to generate output via the HMI 62, the output being dependent on the energy flow composition of energy flows received by the power grid node as determined based on the at least one first message 68.

The device 60 is operative to perform the transmission of the at least one second message 69 and the receipt of the at least one first message 68 in such a manner that the communication pathways in the communication system 30 along which energy flow composition information is propagated follow the energy flow paths through the power grid 10.

The device 60 may be operative to perform control and/or monitoring functions other than control and/or monitoring functions related to energy flow composition. For illustration, the device 60 may be a device of the secondary system of an electric power system, which performs control and/or monitoring functions for primary system equipment of the electric power system. For illustration, the device 60 may be an RTU.

To perform the mentioned operations, the at least one processing circuit 70 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

While the storage system 63 and the HMI 62 are shown as being comprised by the device 60 in Fig. 3, the storage system 63 and/or the HMI 62 may be provided separately from the device 60.

Fig. 4 is a flow chart of a method 80 of propagating energy flow composition information through a communication system comprising devices, each associated with a power grid node. The method 80 may be performed automatically by or using the device 60, by or using the communication system 30, or by or using the electric power system 40.

At process block 81, a device (such as the device 60) associated with a power grid node (such as power grid node 11) receives one or several first messages. Each of the one or several first messages may comprise energy flow composition and data specifying the energy flow composition for a first power line through which the power grid node with which the devices associated receives an energy inflow in a time interval. Each of the one or several first messages may be associated with the time interval in the sense that it specifies the energy flow composition for the time interval.

At process block 82, the devise processes the one or several first messages. The device may process the one or several first messages to determine the energy flow composition of the overall energy inflow received via the one or several first power lines. The amount of energy received in each time interval may be communicated in the one or several first messages or may be determined by measurements. The amount of energy, broken up in accordance with different energy source types, may be determined by the device based on the amount of energy received through each of the first power lines in combination with the energy flow composition for the first power line as specified by the associated first message. Processing the one or several first message messages may comprise determining, by the device, the fractional contributions of several different energy source types to the overall energy inflow of the power grid node.

At process block 83, a control action is performed based on the energy flow composition of the overall energy inflow. The control action may comprise an interface control action that causes one or several second messages to be generated and output, each of the one or several second messages being indicative of the energy flow composition of the energy outflow of the power grid node. Alternatively or additionally, the control action may comprise an HMI control action that causes information on the energy flow composition to be provided. Alternatively or additionally, the control action may comprise a control action affecting power grid equipment and/or energy-consuming devices or systems at a consumer node.

The device 60, the communication system 30, the electric power system 40, and the methods disclosed herein make the energy flow composition available in a manner which enables control actions to be performed at various power grid nodes, including consumer nodes. Although the energy source type and produced amount for each generation source is known, this information is so far not propagated to, e.g., the end consumer (residential, commercial, and industrial consumers). Modern communication networks between nodes of the power grid, together with devices (such as RTUs or other computing devices) at the grid nodes, enable the techniques disclosed herein in which composition information of the electricity is propagated such that it is available at, e.g., consumer nodes. The device 60, the communication system 30, the electric power system 40, and the methods disclosed herein enable energy flow composition propagation, which can ensure that fine-grained information describing the composition of the received electricity is available at a consumer node (e.g., for outputting to the consumer or for automatically controlling consumption based on the energy flow composition). Making such information available for the end consumers can lead to the following benefits, without being limited thereto:
- Less curtailment of renewable generation as sustainability-conscious consumers are motivated to utilize more electricity when renewables are available. This leads to higher renewables penetration and decreased cost of electricity.
- Possibility to guarantee the origin of electricity, which is needed for other types of sustainability certifications, e.g., proving sustainable businesses.
- Increased transparency into electricity origin at the system level, allowing utilities to operate the grid and schedule cross-border exchanges more efficiently.

To ensure the availability of energy flow composition information at consumer nodes, the methods may utilize a communication network between the devices associated with the power grid nodes of the power grid and the available computation capabilities of these devices 60. The communication system 30 may comprise devices that may be configured as remote terminal units (RTU) and wired communication (e.g., Hitachi Energy FOX systems). SCADA systems can also facilitate the communication of information between the devices associated with the power grid nodes. The device 60, the communication system 30, the electric power system 40, and the method may comprise modules operative to exchanges energy flow composition information about the flow of energy. The energy flow composition information and the data indicative of the energy flow composition may have a variety of formats, such as a transmission of energy per time interval in association with fractional contributions made thereto by different energy source types; power and time in association with fractional contributions made thereto by different energy source types; or current, voltage, and time in association with fractional contributions made thereto by different energy source types. The transmitted energy flow information represents the contributions made by the different energy flow types between the power grid nodes. The modules performing the exchange of the energy flow information run at the node level (i.e., power generators, transmission and distribution nodes, energy storage systems, consumers) of the power grid. The devices at node level are operative to propagate information about the energy composition.

The information fields in the messages exchanged between the devices associated with power grid nodes may comprise at least the following:
The device 60, the communication system 30, and/or the electric power system 40 are operative such that the messages (i.e., each of the first messages and/or each of the second messages) exchanged between the devices associated with different power grid nodes follow the flow of energy in the power grid 10: they are transmitted from a device associated with a source of an energy flow towards another device associated with the consumer of the energy flow. The information fields contained in a message exchanged between the devices associated with different power grid nodes may comprise:
- Time interval: start and end times of the interval for which this message describes the energy flow between the sender and receiver nodes. The length of the time interval may be configurable. Values in the minute range provide close to real-time information of the energy composition to the consumers.
- Signature: a digital signature that covers the content of the message, as well as the content of the messages that were used by the source node to generate this message. The signature enables the traceability of the energy composition information. For instance, an auditor can recursively check that the messages transmitted by a node are based on the messages received. Therefore, the energy flow composition information cannot be tampered with.
- Energy flow composition: a list of pairs, where each pair consists of a type of generating source (e.g., wind, solar, coal, gas, nuclear, hydro, unknown) and the percentage of this generation type in the total energy transmitted for the specified time interval from the source node to the destination node.
- Energy: the total amount of energy transmitted in the time interval between the power grid nodes (i.e., the total electric energy in the time interval transmitted through a power line connecting the power grid nodes).

Thus, the device 60, the communication system 30, and/or the electric power system 40 may be operative to receive, in each of several time intervals, one or several first message(s) that respectively comprise data specifying the time interval, a signature, data indicative of the energy flow composition (e.g., in the form of several 2-tuples, as outlined above), and data specifying the total amount of energy in the time interval. Alternatively or additionally, the device 60, the communication system 30, and/or the electric power system 40 may be operative to generate and transmit, in each of several time intervals, one or several second message(s) that respectively comprise data specifying the time interval, a signature, data indicative of the energy flow composition (e.g., in the form of several 2-tuples, as outlined above), and data specifying the total amount of energy in the time interval. The messages may respectively comprise address information. A second message with address information of a message-receiving, second device may be generated and output for all those second devices in the communication system 30 that are associated with a second power grid node that, in the respective time interval, receives an energy inflow from the power grid node with which the device 60 is associated.

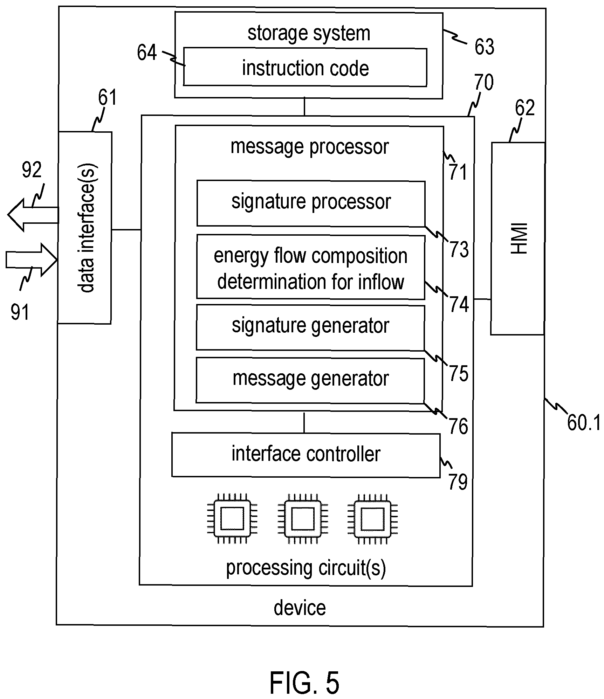

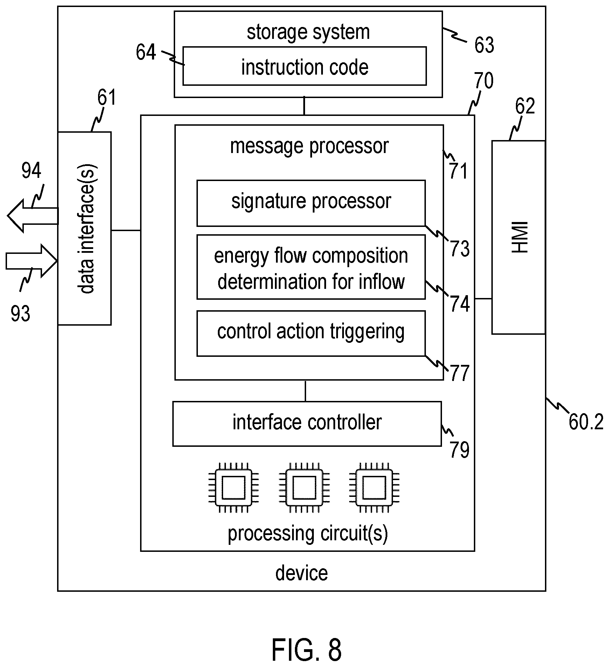

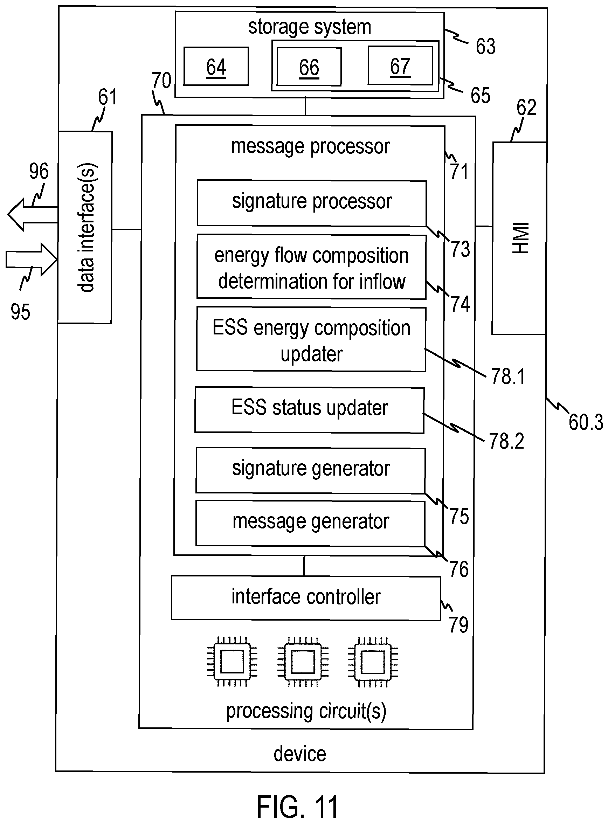

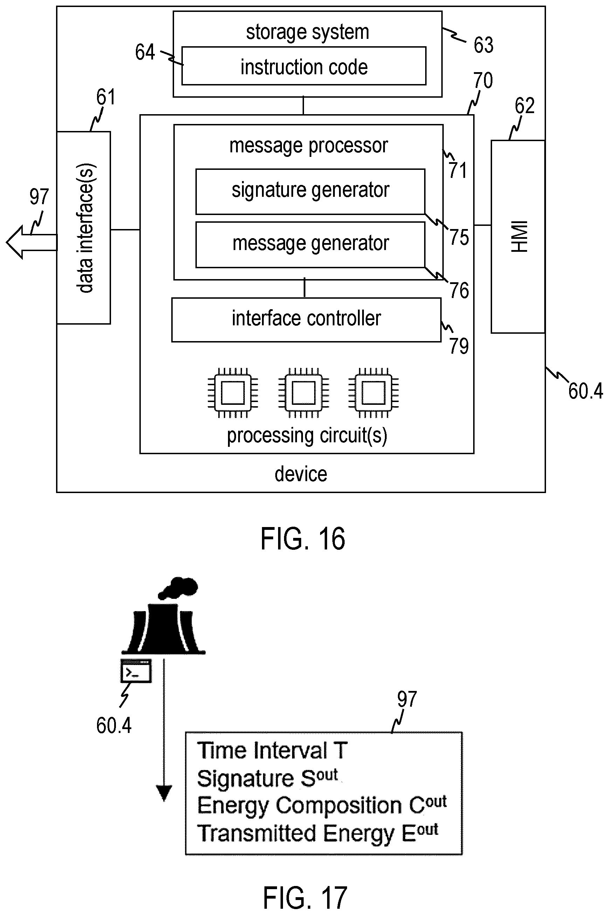

The general operation of the device 60, the communication system 30, the electric power system 40, and the method for propagating energy flow composition information has been described with reference to Fig. 1 to Fig. 4. Specific features that may be implemented depending on the type of power grid node with which the device 60 is associated will be explained next. With reference to Fig. 5, Fig. 6, and Fig. 7, a configuration of a device 60.1 and a method that can be executed by the device 60.1 will be explained when the device 60.1 is operative to be associated with a power grid node that is an intermediate power grid node located in between an energy source node and a consumer node along an energy flow path through the power grid 10. With reference to Fig. 8, Fig. 9, and Fig. 10, a configuration of a device 60.2 and a method that can be executed by the device 60.2 will be explained when the device 60.2 is operative to be associated with a consumer node. With reference to Fig. 11, Fig. 12, Fig. 13, Fig. 14, and Fig. 15 a configuration of a device 60.3 and a method that can be executed by the device 60.3 will be explained when the device 60.3 is operative to be associated with an energy storage system node. With reference to Fig. 16, Fig. 17, and Fig. 18, a configuration of a device 60.4 and a method that can be executed by the device 60.4 will be explained when the device 60.4 is operative to be associated with an energy source node. Throughout the description of Fig. 5 to Fig. 18, features that were already explained in a more generic context in association with Fig. 1 to Fig. 4 may be implemented using any one of the techniques discussed in association with Fig. 1 to Fig. 4.

Fig. 5 shows a schematic representation of a device 60.1. The device 60.1 is operative to be associated with an intermediate power grid node located in between an energy source node and a consumer node along an energy flow path through the power grid 10. Thus, the device 60.1 can also be referred to as intermediate power grid node device 60.1 herein, as it is operative to be associated with an intermediate power grid node located in between an energy source node and a consumer node along an energy flow path through the power grid 10, which is different from an energy storage system node. The device 60.1 may be an RTU or other computing device associated with a transmission line terminal node of a power transmission line of a power transmission grid or with a distribution line terminal node of a power distribution line.

The device 60.1 comprises the at least one data interface 61. The at least one data interface 61 is operative to both receive, for each time interval, one or several first message(s) 91 and to generate and output, for each time interval, one or several second message(s) 92.

The at least one processing circuit 70 is operative to implement a signature processor 73. The signature processor 73 is operative to check the authenticity of the received one or several first messages 91, based on the signatures included in the one or several first messages 91.

The at least one processing circuit 70 is operative to perform an energy flow composition determination 74 for an energy inflow received by the intermediate power grid node with which the device 60.1 is associated. The energy flow composition determination 74 may process the energy flow composition data included in the one or several first messages 91, in association with the energy received in a time interval to which the one or several first messages 91 pertain. The energy may be retrieved from the one or several first messages 91 or may be obtained based on measurement instrumentation. Thereby, the energy flow composition determination 74 is operative to determine, by a summation of the amounts of energy from the same energy source type specified by the different first messages 91 (each of which may relate to a single first power line over which the intermediate power grid node receives an energy inflow), optionally followed by a normalization by division by the total amount of energy received over any of the first power lines over which the intermediate power grid node receives an energy inflow.

The at least one processing circuit 70 is operative to implement a signature generator 75. The signature generator 75 is operative to generate a signature for the one or several second messages 92. The signature may be dependent on all of the received first messages 91 for the respective time interval, and in particular on the signatures included therein. The signature generator 75 may be operative to generate the signature for the one or several second messages such that it allows the authenticity of the one or several second messages to be verified. The signature generator 75 may be operative to generate the signature such that the message flow can be traced through the communication system 30, making it challenging or impossible to tamper with the energy flow composition information.

The at least one processing circuit 70 is operative to implement a message generator 76. The message generator 76 may be operative to generate the one or several second messages 92, respectively including a signature generated by the signature generator 75, and energy flow composition data as determined by the energy inflow composition determination 74. Thereby, Kirchhoff's laws are taken into account, according to which the energy inflow equals the energy outflow for the intermediate power grid node which does not have any energy storage system function. The message generator 76 may be operative to generate the one or several second messages 92 such that they comprise a recipient address of one or several recipient devices associated with one or several second power grid node(s) directly coupled to the intermediate power grid node with which the device 60.1 is associated. Optionally, the signature generator 75 may be operative such that the signature in each of the second messages 92 is dependent on the respective recipient device. Thus, while the energy flow composition data specifying the contributions of different source types is the same for all outgoing second messages 92 in the same time interval, the second messages comprise data elements such as the energy (which may be different for different second power lines), a recipient address, and the signature data that may be different for different second messages 92 generated and output for the same time interval.

The at least one processing circuit 70 of the device 60.1 is operative to implement the interface controller 79. The interface controller 79 is operative to control the data interface 61 to output the at least one second message 92. Optionally, the interface controller 79 may be operative to control the HMI 62 to provide output that depends on the determined energy inflow composition 74.

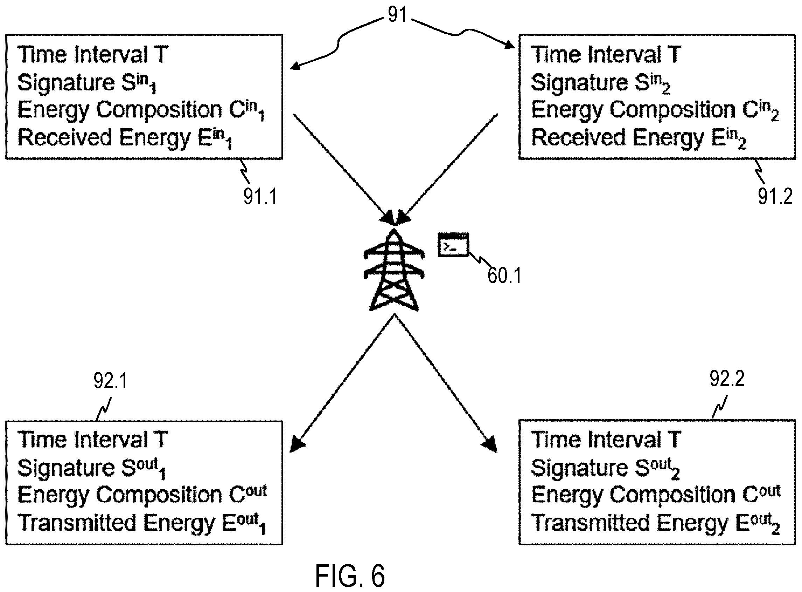

Fig. 6 is a schematic representation that serves to further illustrate operation of the device 60.1 that is operative to be associated with an intermediate power grid node. The device 60.1 is operative to receive one or several first messages 91. The device 60.1 may be operative to receive a first message 91.1 that specifies the energy flow composition Cⁱⁿ₁ and the energy Eⁱⁿ₁ in a time interval T for a first power line through which the intermediate power grid node receives energy. The first message 91.1 comprises a signature Sⁱⁿ₁. The device 60.1 may be operative to receive a further first message 91.2 that specifies the energy flow composition Cⁱⁿ₂ and the energy Eⁱⁿ₂ in the time interval T for a second power line through which the intermediate power grid node receives energy. The further first message 91.1 comprises a further signature Sⁱⁿ₂. More than two or only one first message 91 may be received, depending on the number of power lines through which the intermediate power grid node receives an inflow of energy.

The device 60.1 may be operatively associated with measurement instrumentation operative to measure a current flow. The device 60.1 may be operative to determine, based on Kirchhoff law (sum of outgoing currents is equal to the incoming current), the energy flow composition Cⁱⁿᵢ and the amount Eⁱⁿᵢ of energy in time interval T received through an i^{th} first power line that provides an energy flow to the intermediate power grid node (with i being an index over all such first power lines), the device 60.1 is operative to determine the energy flow composition C^{out} in each second power line through which the intermediate power grid node provides an energy outflow to one or several second power grid nodes.

The device 60.1 is operative to generate the second (i.e., outgoing) message(s) 92 based on the first (i.e., incoming) messages 91 for a given time interval T. For each time interval T, the device 60.1 may be operative to perform the following steps:
(a) For the interval T, the device 60.1 collects all the first messages 91.1, 91.2 that describe the incoming energy for this interval (messages 91.1, 91.2).
(b) Using the energy composition (e.g., Cⁱⁿ₁, Cⁱⁿ₂) and received energy (e.g., Eⁱⁿ₁, Eⁱⁿ₂) information from each such first message 91.1, 91.2, the device 60.1 determines the energy composition (C^{out}) and total amount of outgoing energy.
(c) The device 60.1 generates the second message(s) to be sent to second device(s) associated with one or several second power grid nodes that receive the energy. For the signature of the new messages (e.g., S^{out}₁, S^{out}₂), the device 60.1 covers all the incoming messages (e.g., In₁, In₂) that were used to determine the energy flow composition, as well as at least part of the payload content of the second messages 92.1, 92.2 (such as the energy flow composition and the energy amounts). The device 60.1 is operative to create the second message(s) 92.1, 92.2 such that they have the same energy composition value (C^{out}). The amount of energy transmitted through each of the second power lines (e.g., E^{out}₁, E^{out}₂) can be determined using energy meters.
(d) The device 60.1 outputs the second message(s) 92.1, 92.2 to one or several second device(s) that are associated with second power grid node(s) receiving, in the time interval T, the transmitted energy from the intermediate power grid node with which the device 60.1 is associated.

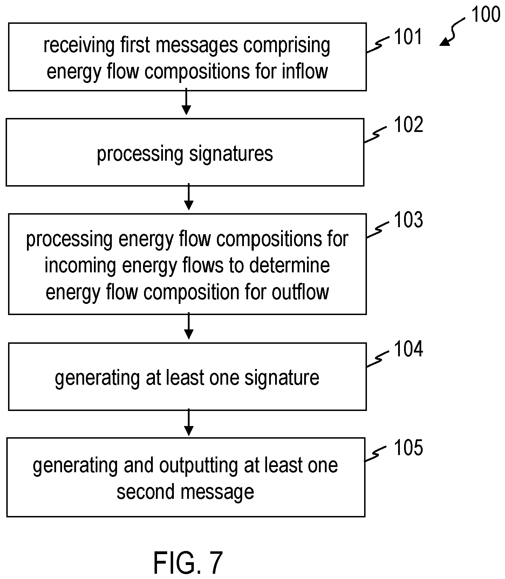

Fig. 7 is a flow chart of a method 100. The method 100 can be performed automatically by the device 60.1, the communication system 30 comprising the device 60.1, or the electric power system 40 comprising the device 60.1.

At process block 101, the device 60.1 receives one or several first message(s), each comprising an energy flow composition for an inflow of energy at the power grid node with which the device 60.1 is associated.

At process block 102, the device 60.1 processes signatures of the one or several first the device 60.1 may perform an authentication based on the signatures, thereby tracking the message flow through the communication system 30 and verifying that the first message(s) include energy flow composition information propagated along all energy flow paths through the power grid 10 from energy source nodes to the intermediate power grid node with which the device 60.1 is associated.

At process block 103, the device 60.1 processes the data indicative of the energy flow composition from the various first messages and thereby determines the energy flow composition of the outgoing energy flow. The energy flow composition of the outgoing energy flow may be determined to be equal to the energy flow composition of the overall energy inflow received by the intermediate power grid node with which the device 60.1 is associated.

At process block 104, the device 60.1 generates at least one signature for at least one second message to be output. The at least one signature may be dependent on the signatures in the received first message(s). The at least one signature may further be dependent on the energy flow composition determined at process block 103. The at least one signature may optionally be also dependent on the overall energy inflow.

At process block 105, the device 60.1 generates and output the at least one second message. A second message per time interval T is generated and provided to each second device that is associated with a second power grid node directly connected to the intermediate power grid node by a second power line. The second message may include the energy flow composition determined at process block 103 and the signature generated at process block 104.

Fig. 8 shows a schematic representation of a device 60.2. The device 60.2 is operative to be associated with a consumer node of the power grid 10. Thus, the device 60.2 can also be referred to as consumer node device 60.1 herein, as it is operative to be associated with a consumer node. The device 60.2 may be a smart meter device, a gateway device, an RTU or other computing device operative to be associated with a consumer node.

The device 60.2 comprises the at least one data interface 61. The at least one data interface 61 is operative to at least receive, for each time interval, one or several first message(s) 93.

The at least one processing circuit 70 is operative to implement a signature processor 73. The signature processor 73 is operative to check the authenticity of the received one or several first messages 93, based on the signatures included in the one or several first messages 93. The data interface

The at least one processing circuit 70 is operative to perform an energy flow composition determination 74 for an energy inflow received by the consumer node with which the device 60.2 is associated. The energy flow composition determination 74 may process the energy flow composition data included in the one or several first messages 93, in association with the energy received in a time interval to which the one or several first messages 93 pertain. The energy may be retrieved from the one or several first messages 93 or may be obtained based on measurement instrumentation. Thereby, the energy flow composition determination 74 is operative to determine, by a summation of the amounts of energy from the same energy source type specified by the different first messages 93 (each of which may relate to a single first power line over which the consumer node receives an energy inflow), optionally followed by a normalization by division by the total amount of energy received over the first power lines over which the consumer node receives an energy inflow.

The at least one processing circuit 70 is operative to implement a control action trigger 77. The control action trigger 77 may be operative to perform a control action that causes information on the energy flow composition, as determined based on the one or several first messages 93, to be output to a user or operator at the consumer node. The control action trigger 77 may cause the information on the energy flow composition to be output by the HMI 62 of or at the device 60.2, or may output one or several second messages 94 to enable the energy flow composition to be output via, e.g., a portable communication terminal. The control action trigger 77 may be operative to generate control data 94 and cause the data interface 61 to output the control data, to automatically or semi-automatically control energy-consuming devices or systems at the consumer node. For illustration, the device 60.2 may be operative to automatically control operation of controllable -consuming devices or systems, selectively dependent on whether the energy flow composition determined based on the at least one first message 93 fulfills an evaluation criterion. The control operation may comprise a selective activation and/or a selective deactivation of controllable -consuming devices or systems, based on the energy flow composition. The evaluation criterion may be comprise a threshold-based evaluation criterion, such as a comparison of the fraction of non-renewable energy source contributions to the energy inflow.

The at least one processing circuit 70 of the device 60.2 is operative to implement the interface controller 79. The interface controller 79 is operative to control the data interface 61 to output the one or several second messages 94 and/or control data 94. Optionally, the interface controller 79 may be operative to control the HMI 62 to provide output that depends on the determined energy inflow composition 74.

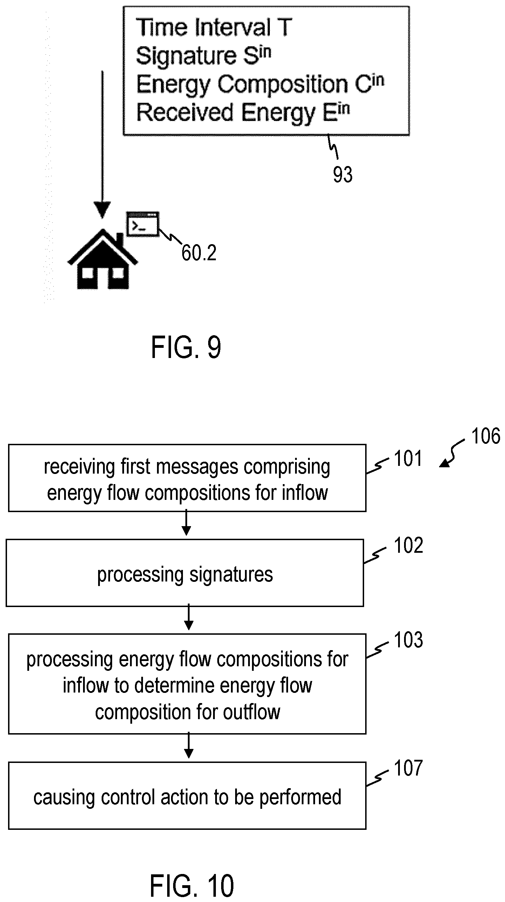

Fig. 9 is a schematic representation that serves to further illustrate operation of the device 60.2 that is operative to be associated with a consumer node. The device 60.2 is operative to receive one or several first messages 93. The device 60.2 may be operative to receive a first message 93.1 that specifies the energy flow composition C'" and the energy Eⁱⁿ in a time interval T for a first power line through which the consumer node receives energy. The device 60.2 may be operative to use the energy composition C'" from one or multiple first messages, in association with the energy Eⁱⁿ (which may be included in the first message(s) 93 and/or may be determined based on measurement instrumentation connected to or integrated into the device 60.2), to determine the energy flow composition of the received energy for a given time interval T.

The device 60.2 is operative to cause one or several control actions to be performed based on the energy flow composition determined based on the one or several first messages 93.

Fig. 10 is a flow chart of a method 106. The method 106 can be performed automatically by the device 60.2, the communication system 30 comprising the device 60.2, or the electric power system 40 comprising the device 60.2. Process blocks 101, 102, and 103 may be performed as explained with reference to Fig. 7. At process block 107, the device 60.2 causes one or several control actions to be performed based on the energy flow composition determined based on the one or several first messages 93. The one or several control actions may comprise one, several, or all of: controlling the HMI 62 to provide information on the energy flow composition via the HMI 62; controlling the data interface(s) 61 to output one or several second message(s) that enable the energy flow composition to be output or otherwise used by, e.g., a portable communication terminal; controlling the data interface(s) 61 to selectively control operation of one or several energy-consuming devices or systems at the consumer node.

Thus, the method 106 comprises causing, by the device 60.2, the at least one control action to be performed based on an energy flow composition determined by the device 60.2 based on energy flow composition information propagated through the communication system 30 of the electric power system 40 from one or several devices associated with an energy source node, through one or several devices associated with intermediate power grid nodes (such as ends of power lines of a transmission and/or distribution grid), and to the device 60.2 associated with the consumer node.

Fig. 11 shows a schematic representation of a device 60.3. The device 60.3 is operative to be associated with an ESS node of the power grid 10. Thus, the device 60.3 can also be referred to as ESS device 60.3 herein, as it is operative to be associated with an ESS node. The device 60.3 may be an RTU or other computing device associated with an energy storage system (ESS) node. The device 60.3 may be a battery management system (BMS) and/or operative to communicatively interface with the BMS.

The storage system 63 of the device 60.3 is operative to maintain ESS-related data 65. The ESS-related data may comprise ESS energy composition data 66 indicating the (fractional or absolute) contributions of different types of energy sources to the energy stored in the ESS. The ESS-related data may comprise ESS status data 67 indicating the total amount of charge or energy stored in the ESS. The ESS energy composition data 66 may comprise several 2-tuples, each specifying a type of energy source and the (fractional or absolute) contribution of that type of energy source to the energy stored in the ESS. The ESS-related data 65 may comprise timestamps that respectively associate the ESS energy composition data 66 and, if present, the ESS status data 67 with an associated time to which the values apply.

The device 60.3 comprises the at least one data interface 61. The at least one data interface 61 is operative to receive, for each time interval in which energy is being stored in the ESS, one or several first message(s) 95. The device 60.3 is operative to generate and output, by the at least one data interface 61, one or several second message(s) 96 for each time interval in which the ESS is discharged towards other power grid nodes of the power grid.

The at least one processing circuit 70 is operative to implement a signature processor 73 and an energy flow composition determination 74 for an energy inflow received by the ESS node. The signature processor 73 and the energy flow composition determination 74 may be implemented as previously explained, e.g., with referenced to Fig. 5.

The at least one processing circuit 70 is operative to implement an ESS energy composition updater 78.1. The ESS energy composition updater 78.1 is operative, responsive to receipt of at least one first message 95, to determine how storage of the energy inflow during ESS charging changes the composition by energy source type of the energy stored in the ESS. The ESS energy composition updater 78.1 may be operative to access the storage system and use the ESS energy composition data 66 and the ESS status data 67, prior to a charging operation in a time interval T, in association with the energy flow composition data and energy received by the ESS in the time interval T to determine the ESS energy composition data 66 and the ESS status data 67 after completion of the charging, i.e., at the end of the time interval T. The ESS energy composition updater 78.1 may be operative to continually update the ESS-related data 65 responsive to receipt of first message(s) 95 comprising data specifying the energy flow composition of a current received by the ESS to charge the ESS. The at least one processing circuit 70 may also be operative to implement an ESS status updater 78.2 operative to quantitatively determine, based on the at least one first message 95 and/or based on measurements, a change in the ESS status (e.g., a change in the stored charge and/or the stored energy).

The ESS status updater 78.2 is operative, responsive to initiation of an ESS discharge operation in which energy flows from the ESS towards other power grid nodes, update the ESS-related data 65 in the storage system 63 as the ESS is discharged, to reflect the change in ESS status data 67.

The at least one processing circuit 70 is operative to implement a signature generator 75, which may generally be operative as already explained with reference to Fig. 5. The signature generator 75 of the device 60.3 is preferably operative such that the signature(s) generated by the signature generator 75 are dependent on all previously received first message(s) 95 that contribute to the energy stored in the ESS at the time at which the discharging operation is initiated. Thereby, the energy flow composition information can be tracked (e.g., by the device 60.2 operative to be associated with a consumer node) even when the energy is intermittently stored in the ESS.

The at least one processing circuit 70 is operative to implement a message generator 76. The message generator 76 may be operative to generate, responsive to initiation of a discharge operation in which energy flows from the ESS node to at least one other power grid node, the one or several second messages 96, respectively including a signature generated by the signature generator 75, and energy flow composition data determined based on the ESS energy composition data 66.

The at least one processing circuit 70 of the device 60.3 is operative to implement the interface controller 79. The interface controller 79 is operative to control the data interface 61 to output the at least one second message 96. Optionally, the interface controller 79 may be operative to control the HMI 62 to provide output that depends on the determined energy inflow composition 74.

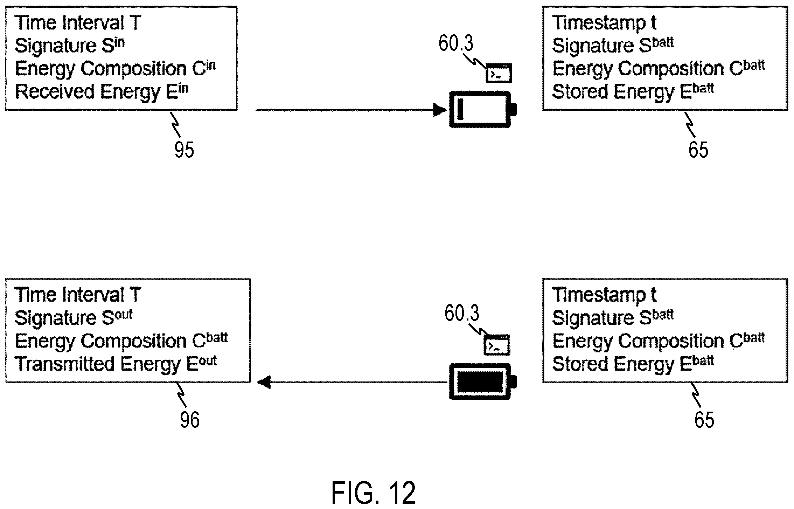

Fig. 12 is a schematic representation that serves to further illustrate operation of the device 60.3 that is operative to be associated with an energy storage system node. The device 60.3 is operative to have two modes of operation for the ESS: when the ESS charges, then the device 60.3 receives at least one first message 95 about the energy flow composition of the energy inflow that charges the ESS. When the ESS outputs energy, it generates at least one second message 96 specifying the energy flow composition of the outgoing energy flow. The device 60.3 associated with an ESS maintains information about its state, including: a timestamp t for which the information is valid; a signature S^{batt} that covers the content of the current state, the previous state(s), and the first message(s) 95 that determined the most recent state change; the current energy composition of the battery C^{batt}, the amount of energy stored E^{batt} at time t.

When the ESS is charging, the device 60.3 receives one or several first message(s) 95 describing the energy flow composition of the incoming energy. The device 60.3 then updates its information about the state, comprising: updating the timestamp t to the end time of the time interval T; updating the signature S^{batt} to cover the previous state and the incoming first message(s) 95; updating the energy composition C^{batt} by using the presently stored energy value E^{batt}, the incoming energy Eⁱⁿ, and the incoming energy composition Cⁱⁿ; updating the stored energy E^{batt} by adding the newly received energy Eⁱⁿ.

When the ESS provides energy, the device 60.3 generates and outputs one or several second message(s) 95 describing the outgoing energy composition. The second message(s) have a signature S^{out} that covers the state of the ESS and an energy composition C^{batt} that is the same as the ESS energy composition 65. The device 60.3 also updates accordingly the remaining stored energy E^{batt} in the ESS-related data.

The ESS may be a battery ESS (BESS), without being limited thereto.

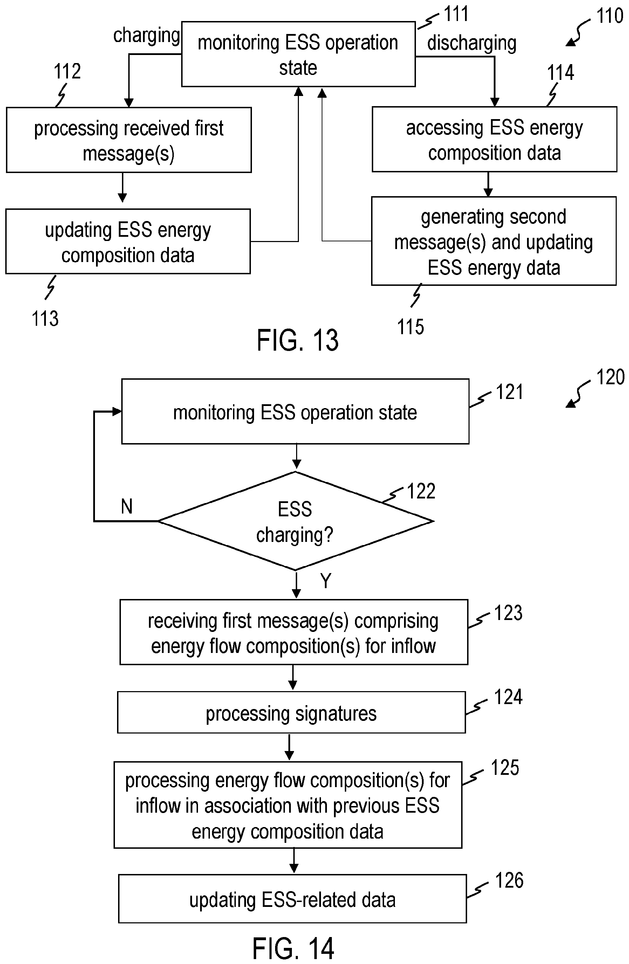

Fig. 13 is a flow chart of a method 110. The method 110 can be performed automatically by the device 60.3, the communication system 30 comprising the device 60.3, or the electric power system 40 comprising the device 60.3.

At process block 111, the ESS operation state is monitored. In particular, the device 60.3 may monitor whether ESS charging or ESS discharging is performed.

At process block 112, during ESS charging, the device 60.3 receives one or several first messages, each comprising data indicative of an energy flow composition of the energy inflow of the ESS node. At process block 113, the device 60.3 updates the ESS energy composition data 66 to reflect the change in the fractional contribution made by different types of energy sources to the overall energy stored in the ESS, in accordance with the received energy and its energy flow composition data. The method may return to process block 111.

At process block 114, during ESS discharging, the device 60.3 accesses the ESS energy composition data 66. At process block 115, the device 60.3 generates at least one second message, with each at least one second message comprising data indicative of an energy flow composition that is equal to that of the ESS energy composition accessed at process block 114.

Fig. 14 is a flow chart of a method 120. The method 120 can be performed automatically by the device 60.3, the communication system 30 comprising the device 60.3, or the electric power system 40 comprising the device 60.3.

At process block 121, the ESS operation state is monitored. Monitoring the ESS operation state may comprise communicatively interfacing, by the device 60.3 with a BMS to determine whether the ESS is discharged or discharged.

At process block 122, it is determined whether ESS charging is performed. If no battery charging is performed, the method returns to process block 121.

At process block 123, responsive to determining that ESS charging is performed, the device 60.3 receives at least one first message comprising data indicative of an energy flow composition of an energy inflow of the ESS node.

At process block 124, the device 60.3 processes the signature(s) included in the at least one first message. Processing the signature(s) may comprise an authentication, e.g., by verifying based on the signature that the at least one first message is based on energy flow composition information propagated through the communication system 30 along the energy flow paths from one or several energy source nodes to the ESS node.

At process block 125, responsive to the authentication based on the signature or signatures, the device 60.3 processes the energy flow composition data in the at least one first message to determine how the ESS energy composition 66 changes. The device 60.3 may use the ESS energy composition data 66 in association with the data indicative of the energy flow composition of the energy inflow of the ESS node, as specified in the at least one first message, to determine how the fractional contributions of different types of energy sources to the overall energy or charge stored by the ESS node are altered by the charging process.

At process block 126, the device 60.3 updates the ESS -related data 65. This may comprise updating the ESS energy composition data 66 based on the processing of process block 125. The updating may comprise updating the ESS status data 67 based on the received amount of energy, which may be indicated by the at least one first message or which may be measured.

The method 120 may comprise using the updated ESS -related data 65 to generate at least one second message during ESS discharging, to thereby propagate information on the energy flow composition to a consumer node.

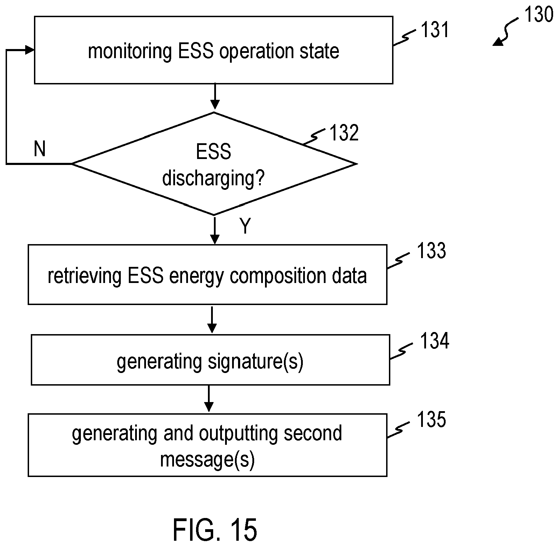

Fig. 15 is a flow chart of a method 130. The method 130 can be performed automatically by the device 60.3, the communication system 30 comprising the device 60.3, or the electric power system 40 comprising the device 60.3.

At process block 131, the ESS operation state is monitored. Monitoring the ESS operation state may comprise communicatively interfacing, by the device 60.3 with a BMS to determine whether the ESS discharged or discharged.

At process block 132, it is determined whether ESS discharging is performed. If no ESS discharging is performed, the method returns to process block 131.

At process block 133, responsive to determining that ESS discharging is performed, the device 60.3 accesses and retrieves the ESS energy composition data 66 stored in the storage system 63.

At process block 134, the device 60.3 generates at least one signature. The at least one signature generated by the device 60.3 may be dependent on the present ESS-related data 65 (e.g., at least on the ESS energy composition data 66, optionally also on the ESS status data 67), on the ESS-related data 65 at at least one earlier point in time, and at least the first message 95 that triggered the most recent change in the ESS-related data.

At process block 135, the device 60.3 generates and outputs at least one second message 96. Each second message of the at least one second message 96 comprises data indicative of an energy flow composition that is equal to the retrieved ESS energy composition data from process block 133. Each second message of the at least one second message 96 comprises a signature generated in accordance with process block 134.

Thus, as was explained with reference to Fig. 11 to Fig. 15, the device 60.3 and the systems comprising the device 60.3 as well as the methods executed using the device 60.3 provide the effect that information on the types of energy sources that contribute to an energy inflow of a consumer node can be propagated to the device 60.2 associated with the consumer node. The information on the energy flow composition represent the actual source contributions, even when the energy is intermittently stored in the ESS before being provided to the consumer node.

Fig. 16 shows a schematic representation of a device 60.4. The device 60.4 is operative to be associated with an energy source node of the power grid 10. The device 60.4 can also be referred to as energy source node device herein, as it is operative to be associated with an energy source node. The device 60.4 may be an RTU or other computing device (such as a power management system and/or an energy management system) associated with the energy source node.

The device 60.4 comprises the at least one data interface 61. The at least one data interface 61 is operative to generate and output, for each time interval in which the energy source node provides an energy flow to a second power grid node, one or several second message(s) 97.

The at least one processing circuit 70 is operative to implement a signature generator 75. The signature generator 75 is operative to generate a signature associated with the device 60.4. The signature may be dependent on the type of energy source with which the device 60.4 is associated.

The at least one processing circuit 70 is operative to implement a message generator 76. The message generator 76 may be operative to generate the one or several second messages 97, respectively including the signature generated by the signature generator 75, and energy flow composition data. The energy flow composition data specifies the type of the energy source node (such as a type of renewable energy source, e.g., solar, wind, water turbine, tidal, etc., or a type of non-renewable energy source, e.g., gas, coal, nuclear, etc.) that provides the energy flow. The one or several second messages 97 may respectively comprise the amount of energy transmitted in a time interval T to another power grid node (such as an intermediate power grid node at a terminal of a power transmission line or of a power distribution line). The amount of energy may be obtained based on measurement instrumentation. The device 60.4 may comprise the measurement instrumentation or may be operative to communicatively interface with the measurement instrumentation.

Fig. 17 is a schematic representation that serves to further illustrate operation of the device 60.4 that is operative to be associated with an energy source node. The device 60.4 is operative to generate one or several second message(s) 97 for each of several time intervals T. The device 60.4 may be operative to send the one or several second message(s) 97 for each time interval to all the neighbor power grid nodes that receive energy via a power line that directly connects the neighbor power grid nodes to the energy source node. The data indicative of the energy flow composition of the one or several second message(s) can consist of only one pair (type_of_energy, 100%), where type of energy describes the type of the energy source generator (e.g., nuclear, wind, solar, hydro, coal).

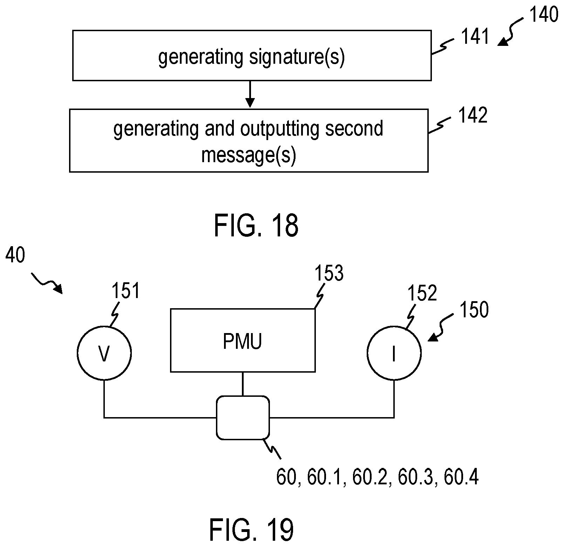

Fig. 18 is a flow chart of a method 140. The method 140 can be performed automatically by the device 60.4, the communication system 30 comprising the device 60.4, or the electric power system 40 comprising the device 60.4.

At process block 141, the device 60.4 generates at least one signature. The at least one signature generated by the device 60.4 may be dependent on the device 60.4, e.g., on a unique device identifier (e.g., a MAC address).

At process block 142, the device 60.4 generates and outputs at least one second message 97. Each second message of the at least one second message 97 comprises data indicative of an energy flow composition that indicates that 100% of the energy flow originates from the energy source type of the energy source with which the device 60.4 is associated.

Thus, as was explained with reference to Fig. 16 to Fig. 18, the device 60.4 and the systems comprising the device 60.4 as well as the methods executed using the device 60.4 provide the effect that information on the types of energy sources is propagated starting at the energy source nodes. The device 60.4 provides the seed for determining the energy flow compositions at any power grid node that receives, directly or indirectly, an energy flow starting at the respective energy source node with which the device 60.4 is associated. The device 60.4 also provides a seed for the signature verification that allows the energy flow information to be tracked in a verification procedure performed, e.g., by the device 60.2 associated with a consumer node.

In each of the implementations, the device 60, 60.1, 60.2, 60.3, or 60.4 may comprise measurements instrumentation or may be operative to communicatively interface with measurement instrumentation.

Fig. 19 is a schematic representation of an electric power system 40 comprising at least one device 60, 60.1, 60.2, 60.3, or 60.4 according to an embodiment and measurement instrumentation 150. The measurement instrumentation 150 may comprise one, several, or all of: a voltage measurement device 151 (such as a voltage transformer); a current measurement device 152 (such as a current transformer); phasor measurement unit (PMU) 153. The device 60, 60.1, 60.2, 60.3, or 60.4 may be operative to use measurements determined by the measurement instrumentation 150 as input for applying Kirchhoff's junction rule to determine payload data of the second message(s), e.g., the data specifying the energy flow composition.

It is not required, but still possible, for the energy amount to be indicated in the first and/or second messages. For illustration, when the device 60, 60.1, 60.2, 60.3 is operative to communicatively interface with measurement instrumentation 150 that measures, for each powerline by which the associated power grid node receives an energy inflow, the respective energy per time interval, it is not required for the device 60, 60.1, 60.2, 60.3 2 determine the amount of energy based on the received first message.

An electric power system 40 according to an embodiment may comprise a communication system 30 operative to propagate information on an energy flow composition through the communication system 30, generally along the energy flow paths. The communication system 30 may comprise at least one device 60.4 associated with an energy source node, at least two devises 60.1 respectively associated with different intermediate power grid nodes (such as power grid nodes at the terminals of a transmission or distribution line), and at least one device 60.2 associated with a consumer node. The communication system 30 may comprise at least one device 60.3 associated with an ESS, such as a battery ESS.

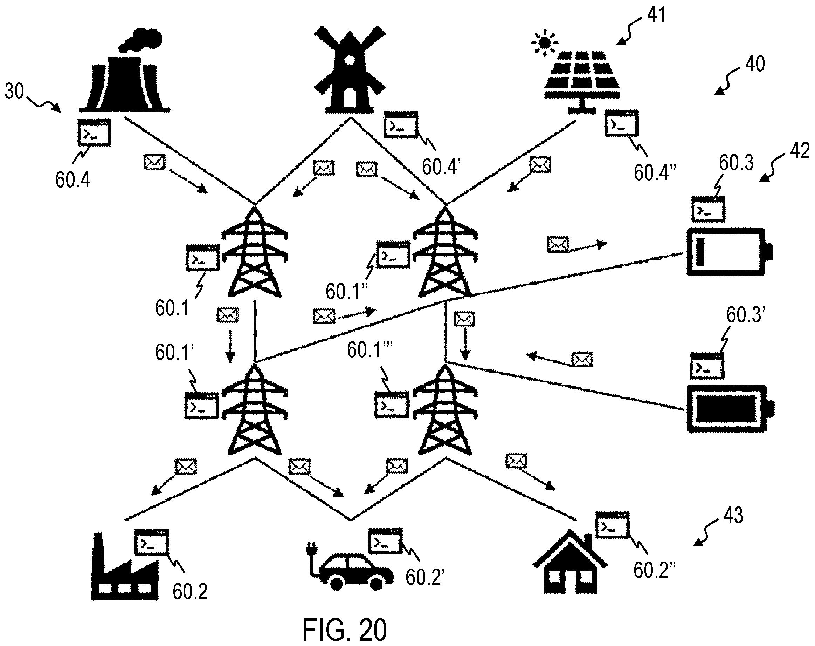

Fig. 20 is a schematic representation of an exemplary electric power system 40. The electric power system 40 comprises a plurality of energy sources 41, a plurality of energy consumers 43, and a transmission and/or distribution system 42 interconnecting the energy sources 41 and the energy consumers 43.

The communication system 30 comprises a plurality of devices, each associated with at least one power grid node, and communication links between the plurality of devices. For illustration, the communication system 30 may comprise a plurality of source node devices 60.4, 60.4', 60.4", each being associated with a different energy source node of the power grid. For further illustration, the communication system 30 may comprise a plurality of devices 60.1, 60.1', 60.1", 60.1‴, each associated with an intermediate power grid node intermediate between an energy source node and a consumer node and different from an ESS node. The communication system 30 may comprise at least one device 60.3, 60.3', each associated with an ESS node. The communication system 30 comprises a plurality of devices 60.2 6, 60.2', 60. 2", each associated with a consumer node.

The different devices may respectively be operative as explained with reference to Fig. 1 to Fig. 19. Devices indicated by an apostrophe are operative as explained with reference to the respective device type preceding the apostrophe.

Thus, the communication system 30 is operative to propagate information on the energy flow composition, which originates at the source node devices 60.4, 60.4', 60.4" associated with energy source nodes of the power grid and which is modified as it is propagated through the communication system, to thereby reflect different combinations of energy from different types of energy sources.

The communication system 30 is operative such that a device 60.2 6, 60.2', 60. 2" associated with a consumer node is respectively operative to receive and utilize energy flow composition information that is based on several messages propagated through the communication system 30 and that indicates the actual contributions made by different types of energy sources to the energy inflow of the consumer node.

It is possible but not required that there be a one-to-one correspondence between device and a single power grid node. A device may also be associated with several power grid nodes, with the message flow still generally following the energy flow through the power grid. An example is illustrated and will be explained with reference to Fig. 21.

Fig. 21 is a schematic representation of an exemplary electric power system 40 comprising a communication system 30. The communication system comprises devices 60.1, 60.1', each associated with different parts of a transmission and/or distribution gride. Each of the devices 60.1, 60.1' may be operative to propagate information on the energy flow composition of energy flows between different parts of the transmission and/or distribution grid 42. The devices 60.1, 60.1' may respectively be comprised by a SCADA system of the transmission and/or distribution grid 42 or may be communicatively interfaced with the SCADA system of the transmission and/or distribution grid 42.

Thus, the devices, systems, and methods may be operative such that information about the energy flow composition can be exchanged by the SCADA systems that supervise sections of the transmission and/or distribution grid 42. In this case, the SCADA systems can transmit and receive energy flow composition data flowing at the borders of the grid sections that they control.

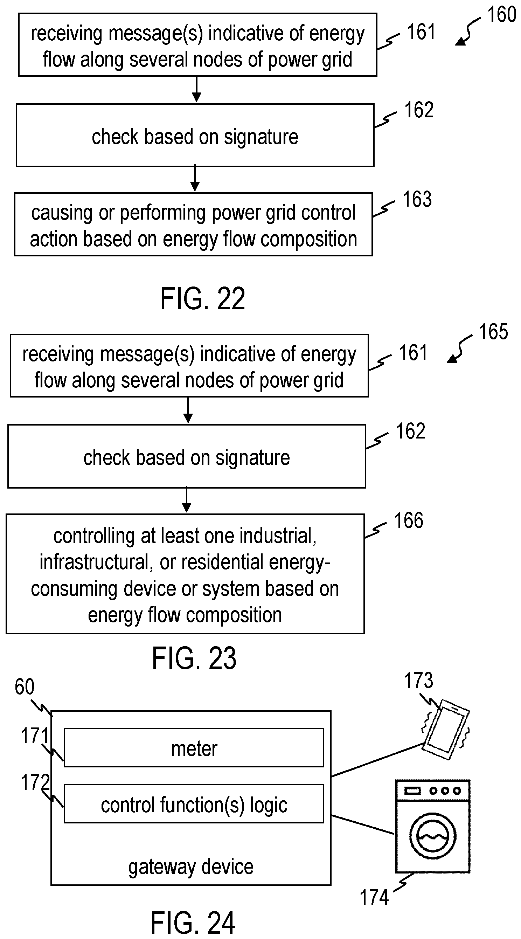

Fig. 22 is a flow chart of a method 160. The method 160 may be performed automatically by or using the devices 60, in particular the device 60.1 associated with an intermediate power grid node or the device 60.3 associated with an ESS node.

At process block 161, the device receives at least one message indicative of an energy flow along several power grid nodes of the power grid. The at least one message may comprise data specifying an energy flow composition of an incoming energy flow, with the data specifying the energy flow composition of the incoming energy flow being based on several other messages that each specify the energy flow composition for other power lines in the electric power system 40.

At process block 162, a check based on a signature included in each of the received at least one message is performed. The check may comprise an authentication based on the signature. Alternatively or additionally, the check may comprise verifying that the received message is based on a set of the preceding messages that follows a possible energy flow path from an energy sources to the respective power grid node.

At process block 163, a control action may be performed or may be caused to be performed based on the data indicative of the energy flow composition. The control action may be performed automatically or semi-automatically. The control action may comprise, for example, a control action acting on primary system equipment (such as a tap changer or valves of an HVDC system). The control action may comprise initiation of an ESS charging or ESS discharging operation, dependent on the data indicative of the energy flow composition.

Fig. 23 is a flow chart of a method 165. The method 165 may be performed automatically by or using the devices 60, in particular the device 60.2 associated with an energy source node.

Process blocks 161, 162 may be implemented as described with reference to Fig. 22.

At process block 163, a control action may be performed or may be caused to be performed based on the data indicative of the energy flow composition. The control action may be performed automatically or semi-automatically. The control action may comprise, for example, controlling at least one energy-consuming device or system at the respective consumer node based on the data indicative of the energy flow composition. The at least one energy-consuming device or system may comprise any one or any combination of: a residential energy-consuming device or system (such as a household appliance, an electric heating system, etc.); an industrial energy-consuming device or system (such as a furnace, an electric heating system, an electrolysis system, a manufacturing system); an infrastructural energy-consuming device or system (such as electric vehicle charging equipment).

Fig. 24 shows a schematic representation of the device 60 or 60.2 Operative to be used in association with a consumer node. The device 60 may comprise a meter or other measurement instrumentation, which may be operative to measure the incoming energy flow per time interval T. The device 60 may further comprise a control function logic 172 operative to perform one or several control functions. The one or several control functions may comprise selective activation or deactivation of an energy consuming device or system, such as a residential, industrial, or infrastructural equipment 174. The one or several control functions may comprise an alert function that alerts a user of the operator, e.g., by communicatively interfacing with a communication terminal device 173.

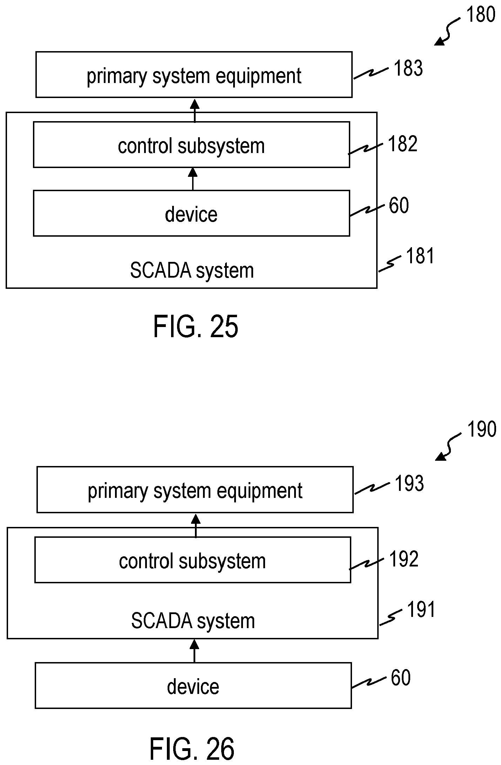

Fig. 25 shows a schematic representation of an electric power system 180 according to an embodiment. The electric power system 180 comprises primary system equipment 183 and a SCADA system 181. The SCADA system 181 comprises the device 60 (e.g., the device 60.1 or the device 60.3) and a SCADA control subsystem 182 communicatively interfaced with the device 60. The SCADA control subsystem 182 is operative to perform control actions responsive to output provided by the device 60. The control actions may be dependent on the energy flow composition of an energy inflow and/or of an energy outflow as determined by the device.

Fig. 26 shows a schematic representation of an electric power system 190 according to an embodiment. The electric power system 190 comprises primary system equipment 193 and a SCADA system 191. The SCADA system 191 comprises a SCADA control subsystem 192. The SCADA system 191 is communicatively interfaced with the device 60 (e.g., the device 60.1 or the device 60.3). The SCADA control subsystem 192 is operative to perform control actions responsive to the output 69 provided by the device 60. The control actions may be dependent on the energy flow composition of an energy inflow and/or of an energy outflow as determined by the device.

Various effects and advantages are attained by the device, communication system, electric power system, and method according to embodiments. The devices, systems, and methods according to embodiments provide enhanced techniques of propagating information related to the contributions made by different types of energy sources to an energy flow. The devices, systems, and methods are operative to propagate this information related to the energy flow composition to devices of the consumer nodes. The devices, systems, and methods are therefore operative to make information related to the energy flow composition available for use in control or other functions, e.g., at the consumer nodes.

The devices, systems, and methods therefor enhance awareness of the effect of electric power consumption in view of the current energy flow composition. The devices, systems, and methods also allow control actions to be taken, based on the actual contributions of different types of energy sources on the energy inflow that is currently received.

While embodiments have been described in detail with reference to the drawings, various modifications may be implemented in other embodiments. For illustration rather than limitation:
- While embodiments have been described in association with AC power grids, the techniques disclosed herein may also be used in association with a high voltage direct current (HVDC) control system or a microgrid control system.
- While embodiments have been described in which the device 60 is comprised by or communicatively interfaced with a SCADA system, the device 60 can also be used in other use cases, e.g., to perform RTU functions or other control functions.
- While exemplary grid topologies have been shown and explained with reference to the drawings, the grid topology is, in particular the number of power grid nodes and/or the number of powerlines, is merely illustrative and in no means limited to the exemplary implementations illustrated in the drawings.
- While an exemplary format of data indicative of an energy flow composition has been explained, in which the data comprises one or several 2-tuples specifying the type of energy source and the associated fractional contribution of the type of energy source to the energy flow, a wide variety of different formats may be used. For illustration, the data indicative of the energy flow composition may comprise an ordered array of numerical values, each of the numerical values representing the fractional contribution of a type of energy source to the energy flow, and the position in the ordered array being assigned to a given type of energy source.
- While exemplary messages have been described in which the first and/or second messages include an amount of energy in combination with time and the data specifying the energy flow composition, various other, technically equivalent formats may be used to indicate the energy flow. For illustration, instead of energy per time interval and time interval, power in combination with the time interval to which the power relates can be specified in the message. For further illustration, instead of energy per time interval and time interval, current, voltage, and time interval can be specified in the message.
- While exemplary messages have been described which comprise information on the amount of energy in addition to the data indicative of the energy flow composition, it is not required for the amount of energy to be transmitted. For illustration, the amount of energy for each incoming powerline may also be determined using measurement instrumentation.
- While exemplary communication system implementations have been discussed, alternative or additional communication techniques may be used in embodiments. For illustration, the devices of the communication system 30 may be operative to communicatively interface with each other via a wide area network (WAN), a cellular network, or other communication techniques.

Embodiments may be used in association with a power grid having renewables penetration, such as power grid comprising renewable energy systems (such as DERs), without being limited thereto.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A method of propagating information on power grid energy flows, the method comprising:
exchanging, by a device (31-36; 60; 60.1; 60.2; 60.3; 60.4), data (68, 69; 91-97) over at least one data interface (61), the data (68, 69; 91-97) being indicative of an energy flow composition, the energy flow composition being a composition by energy source type, the device (31-36; 60; 60.1; 60.2; 60.3; 60.4) being associated with a power grid node (11) of a power grid (10), wherein exchanging the data (68, 69; 91-97) comprises:
receiving at least one first message (68; 91; 93; 95) from at least one first device (32, 33) associated with at least one first power grid node (12, 13), wherein the power grid node (11) receives an energy inflow from the at least one first power grid node (12, 13), and/or
transmitting at least one second message (69; 92; 94; 96; 97) to at least one second device (34-36) associated with at least one second power grid node (14-16), wherein the power grid node (11) provides an energy outflow to the at least one second power grid node (14-16).

2. The method of claim 1, wherein exchanging the data (68, 69; 91-97) comprises receiving, by the device (31; 60; 60.1; 60.2; 60.3) and over the at least one data interface (61), several first messages (68; 91; 93; 95), each of the several first message (68; 91; 93; 95) specifying contributions of several different energy source types to the energy inflow of the power grid node (11) in at least one first power line (22, 23) of the power grid (10).

3. The method of claim 2, wherein the power grid node receives the energy inflow from several first power grid nodes (12, 13) via several first power lines (22, 23) of the power grid (10), wherein the device (31; 60; 60.1; 60.2; 60.3) receives at least one of the several first messages (68; 91; 93; 95) for each of the several first power lines (22, 23) to obtain the energy flow composition for each of the several first power lines (22, 23).

4. The method of claim 3, wherein each of the several first messages (68; 91; 93; 95) specifies the energy flow composition for only one of the first power lines (22, 23).

5. The method of claim 3 or claim 4, wherein receipt of at least one of the first messages (68; 91; 93; 95) by the device (31-36; 60; 60.1; 60.2; 60.3; 60.4) is triggered when the energy flow composition in at least one of the several first power lines (22, 23) changes.

6. The method of any one of claims 2 to 5, wherein the several different energy source types comprise at least one renewable energy source type and at least one non-renewable energy source type.

7. The method of any one of the preceding claims, wherein each first message (68; 91; 93; 95) of the at least one first message (68; 91; 93; 95) comprises a signature, and wherein the method further comprises verifying, by the device (31-36; 60; 60.1; 60.2; 60.3; 60.4), authenticity of the at least one first message (68; 91; 93; 95) based on the signature.

8. The method of claim 7, wherein the signature is dependent on all power grid nodes positioned along several pathways from energy sources (41) to the power grid node (11) which contribute to the energy inflow of the power grid node (11).

9. The method of any one of the preceding claims, further comprising
processing, by the device (31-36; 60; 60.1; 60.2; 60.3), the at least one first message (68; 91; 93; 95) to determine the energy flow composition of the energy inflow of the power grid node (11), and
causing, by the device (31-36; 60; 60.1; 60.2; 60.3), an action based on the energy flow composition of the energy inflow of the power grid node (11).

10. The method of claim 9, wherein the action comprises generating the at least one second message (69; 92; 94; 96; 97), wherein the at least one second message (69; 92; 94; 96) specifies the energy flow composition of the energy outflow provided by the power grid node (11).

11. The method of claim 10, wherein the action further comprises:
detecting, by the device (31-36; 60; 60.1; 60.2; 60.3), a change in the energy flow composition of the energy inflow of the power grid node (11), and
responsive to detecting the change, repeating the generation of the at least one second message(69; 92; 94; 96) to propagate information on time-dependent changes in the energy flow composition.

12. The method of any one of claims 9 to 11, wherein the action comprises one or both of:
controlling at least one energy consumer (174) as a function of time based on the energy flow composition of the energy inflow of the power grid node (11);
providing information on the energy flow composition via a human machine interface (62; 173).

13. Machine-readable instruction code (64) comprising instructions which, upon execution by at least one programmable circuit of a device (31-36; 60; 60.1; 60.2; 60.3; 60.4), cause the device (31-36; 60; 60.1; 60.2; 60.3; 60.4) to perform the method of any one of the preceding claims.

14. A device (31-36; 60; 60.1; 60.2; 60.3; 60.4) for use in association with a power grid node (11-16) of a power grid (10), the device (31-36; 60; 60.1; 60.2; 60.3; 60.4) comprising:
at least one data interface (61), and
at least one processing circuit (70) coupled to the at least one data interface (61) and operative to control the at least one data interface (61) to exchange data (68, 69; 91-97) indicative of an energy flow composition, the energy flow composition being a composition by energy source type,
the device (31-36; 60; 60.1; 60.2; 60.3; 60.4) being operative such that exchanging the data (68, 69; 91-97) comprises:
receiving at least one first message (68; 91; 93; 95) from at least one first device (32, 33) associated with at least one first power grid node (12, 13), wherein the power grid node (11) receives an energy inflow from the at least one first power grid node (12, 13), and/or
transmitting at least one second message (69; 92; 94; 96; 97) to at least one second device (34-36) associated with at least one second power grid node (14-16), wherein the power grid node (11) provides an energy outflow to the at least one second power grid node (14-16).

15. An electric power system (40), comprising:
a power grid (10) comprising a plurality of power grid nodes (111-16; 41, 43);
a communication system (30) for propagating information on power grid energy flows, the communication system (30) comprising at least one device (31-36; 60; 60.1; 60.2; 60.3; 60.4) of claim 14.
